(19) Europäisches Patentamt
European Patent Office
Office européen des brevets

(11) **EP 4 776 525 A1**

(12) **EUROPEAN PATENT APPLICATION**
published in accordance with Art. 153(4) EPC

(43) Date of publication:
**15.07.2026 Bulletin 2026/29**

(21) Application number: **24863291.1**

(22) Date of filing: **09.09.2024**

(51) International Patent Classification (IPC):
**H04B 7/06** (2006.01)    **H04B 7/08** (2006.01)
**H04B 7/0408** (2017.01)    **H04W 24/08** (2009.01)
**H04W 24/10** (2009.01)    **H04W 72/0446** (2023.01)
**H04W 72/0457** (2023.01)    **H04W 72/25** (2023.01)
**H04W 76/28** (2018.01)

(52) Cooperative Patent Classification (CPC):
**H04B 7/0408; H04B 7/06; H04B 7/08; H04W 24/08;
H04W 24/10; H04W 72/0446; H04W 72/0457;
H04W 72/25; H04W 76/28**

(86) International application number:
**PCT/KR2024/013597**

(87) International publication number:
**WO 2025/053712 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 KR 20230119867**

(71) Applicant: **LG Electronics Inc.**
**Yeongdeungpo-gu**
**Seoul 07336 (KR)**

(72) Inventors:
• **PARK, Hanjun**
  **Seoul 06772 (KR)**
• **LEE, Seungmin**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR MEASURING AND REPORTING BEAM IN MULTI-BEAM-BASED DEVICE-TO-DEVICE COMMUNICATION**

(57) Proposed is an operation method of a first device (100) in a wireless communication system. The method may comprise the steps of: receiving feedback related to a second beam used for transmission by a third device (300) from a second device (200) on the basis of a first beam, wherein the reception strength of the feedback is greater than or equal to a threshold value; receiving information on a first resource related to the second beam from the third device (300); and excluding the first resource from a candidate resource set for resource selection.

FIG. 16

receiving, from a second device based on a first beam, feedback related to a second beam that a third device uses for a transmission — S1610

receiving, from a third device, information for a first resource related to a second beam — S1620

excluding a first resource from a candidate resource set for a resource selection — S1630

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method may be proposed. For example, the method may comprise: receiving, from a second device based on a first beam, feedback related to a second beam that a third device uses for a transmission, wherein a reception strength of the feedback may be greater than or equal to a threshold value; receiving, from the third device, information for a first resource related to the second beam; and excluding the first resource from a candidate resource set for a resource selection.

According to an embodiment of the present disclosure, a first device may comprise: at least one transceiver; at least one processor; and at least one memory connected to the at least one processor and storing instructions. For example, the instructions, based on being executed by the at least one processor, may cause the first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

According to an embodiment of the present disclosure, a non-transitory computer-readable storage medium storing instructions may be proposed. For example, the instructions, based on being executed, may cause a first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

According to an embodiment of the present disclosure, a method may be proposed. For example, the method may comprise: receiving, from a third device, an inter-device reference signal based on a second beam; transmitting, to the third device, a beam report for the inter-device reference signal, based on a first beam corresponding to the second beam, wherein the beam report may be received by a first device, and wherein a reception strength of the beam report at the first device may be greater than or equal to a threshold value; and receiving, from the third device, information for a first resource related to a third beam corresponding to the second beam, wherein the information for the first resource may be received by the first device, and wherein the first resource may be excluded from a candidate resource set for a resource selection at the first device.

According to an embodiment of the present disclosure, a second device may be proposed. For example, the first device may comprise: at least one transceiver; at least one processor; and at least one memory connected to the at least one processor and storing instructions. For example, the instructions, based on being executed by the at least one processor, may cause the second device to: receive, from a third device, an inter-device reference signal based on a second beam; transmit, to the third device, a beam report for the inter-device reference signal, based on a first beam corresponding to the second beam, wherein the beam report may be received by a first device, and wherein a reception strength of the beam report at the first device may be greater than or equal to a threshold value; and receive, from the third device, information for a first resource related to a third beam corresponding to the second beam, wherein the information for the first resource may be received by the first device, and wherein the first resource may be excluded from a candidate resource set for a resource selection at the first device.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a transmission spatial filter and a reception spatial filter, according to one embodiment of the present disclosure.

FIG. 10 shows a method for determining whether a reception spatial filter covers a transmission spatial filter, according to one embodiment of the present disclosure.

FIG. 11 shows a beam measurement operation performed using a separately defined dedicated resource pool and a shared resource pool according to an embodiment of the present disclosure.

FIG. 12 shows transmission timing of a reference signal for beam measurement and a resource for a beam report according to an embodiment of the present disclosure.

FIG. 13 shows a time domain transmission unit for beam sweeping-based transmission of a reference signal for beam measurement.

FIG. 14 shows a transmission resource selection procedure based on reception strength of a feedback channel according to an embodiment of the present disclosure.

FIG. 15 shows transmit beams and receive beams used by UEs for inter-UE communication according to an embodiment of the present disclosure.

FIG. 16 shows a procedure for a first device to perform wireless communication, according to one embodiment of the present disclosure.

FIG. 17 shows a procedure for a second device to perform wireless communication, according to one embodiment of the present disclosure.

FIG. 18 shows a communication system 1, based on an embodiment of the present disclosure.

FIG. 19 shows wireless devices, based on an embodiment of the present disclosure.

FIG. 20 shows a signal process circuit for a transmission signal, based on an embodiment of the present disclosure.

FIG. 21 shows another example of a wireless device, based on an embodiment of the present disclosure.

FIG. 22 shows a hand-held device, based on an embodiment of the present disclosure.

FIG. 23 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

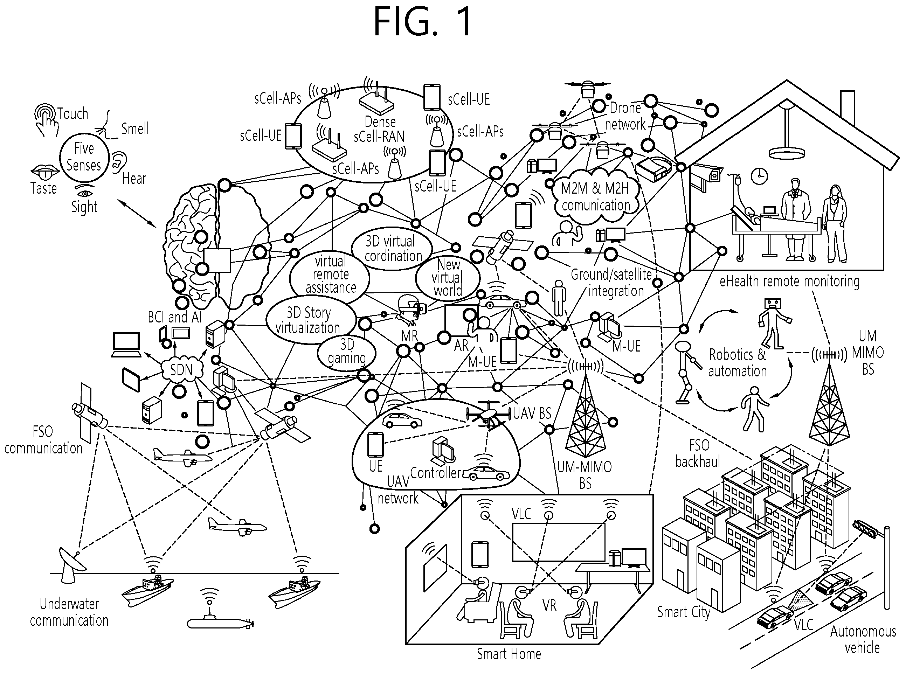

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).

- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

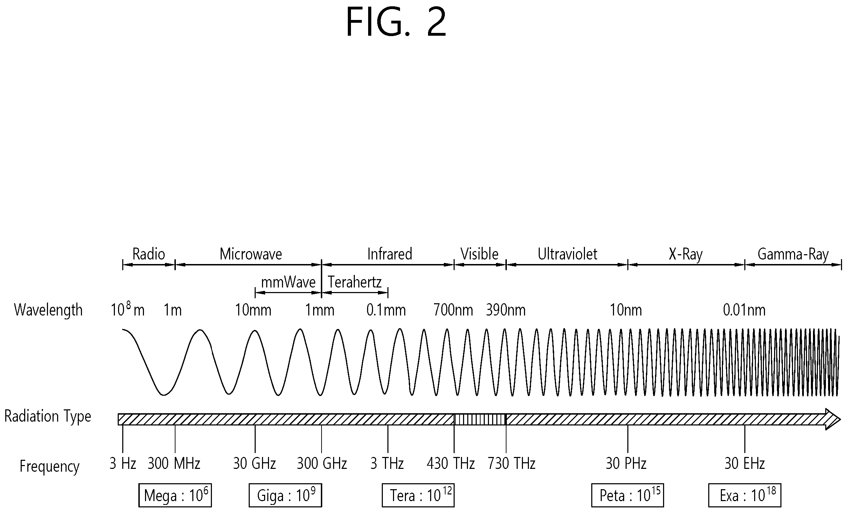

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Advanced air mobility, AAM: AAM is the higher-level concept of urban air mobility (UAM), which refers to air transportation in urban centers, and may include travel between urban centers and regional hubs.

- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.

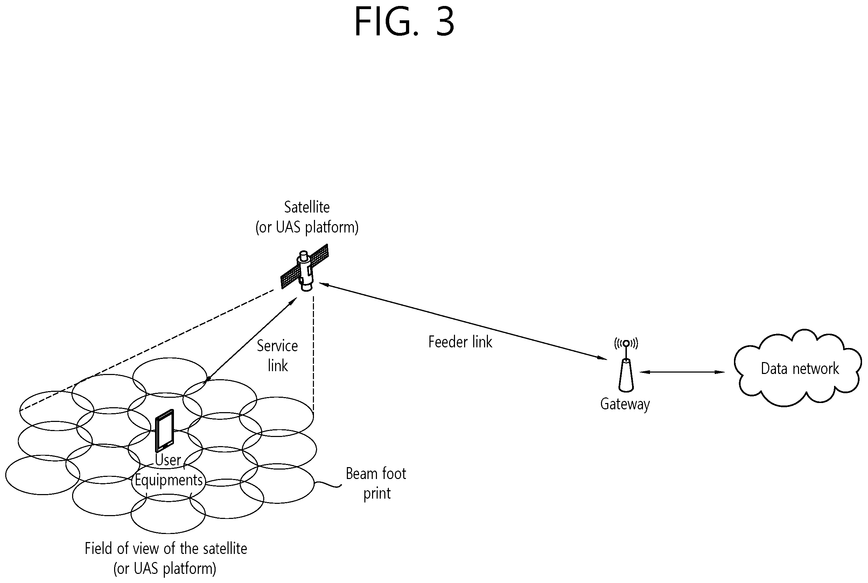

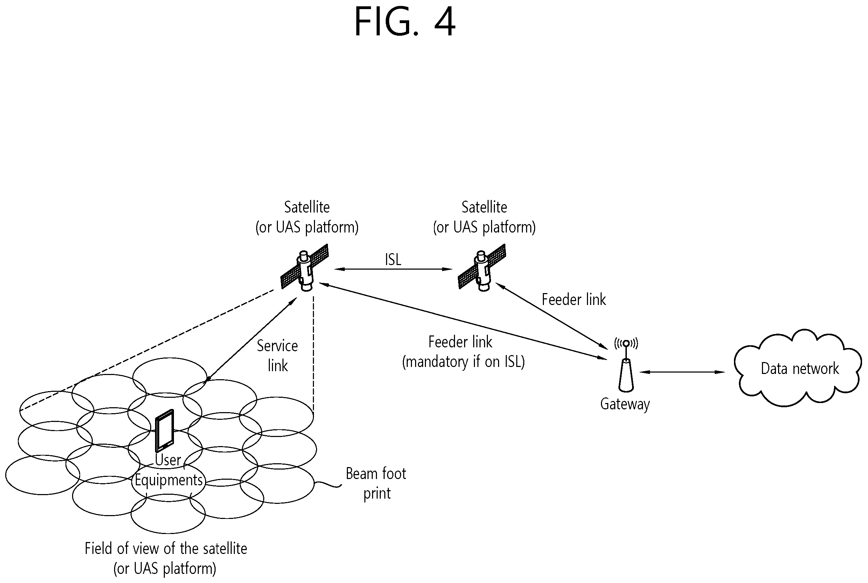

- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).

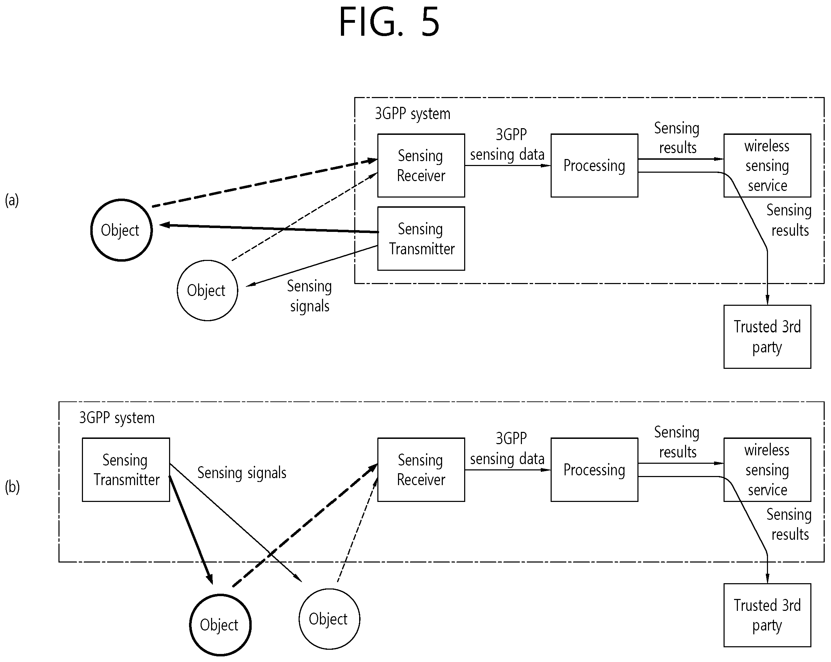

- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

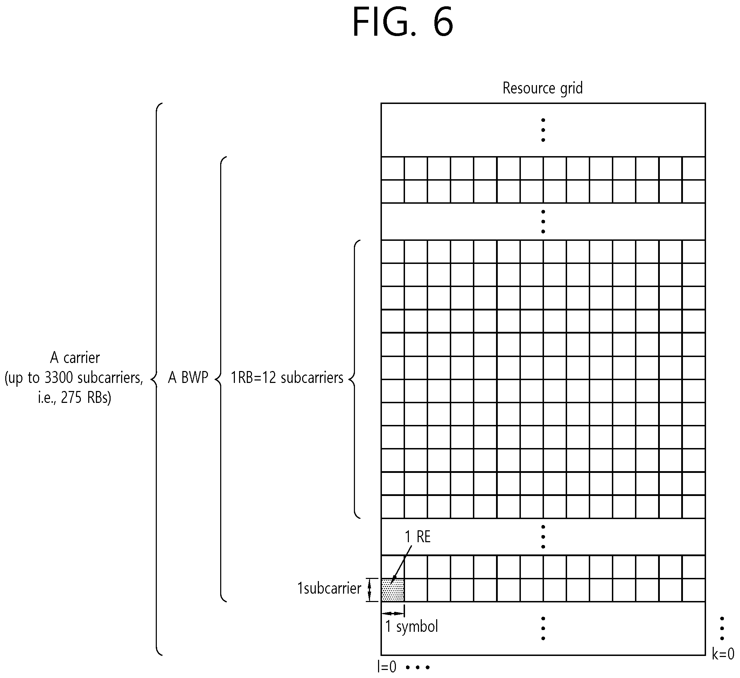

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

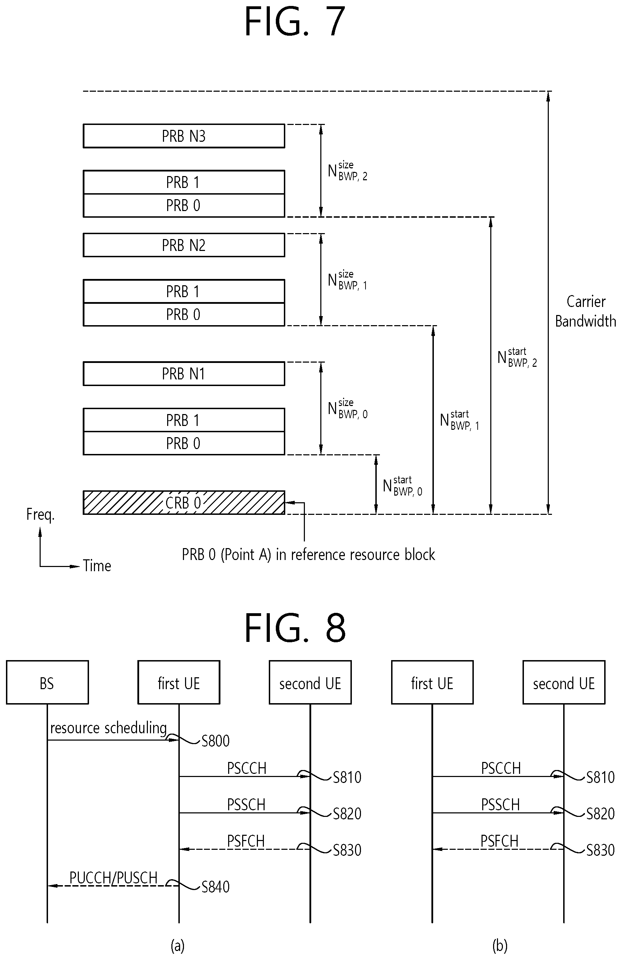

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Hereinafter, a UE procedure for determining a subset of resources to be reported to a higher layer in inter-UE physical shared channel (e.g., PSSCH) resource selection in sidelink resource allocation mode 2 will be described.

In resource allocation mode 2, the higher layer can request the UE to determine a subset of resources from which the higher layer will select resources for inter-UE physical channel (e.g., PSSCH/PSCCH) transmission. To trigger this procedure, in slot n, the higher layer provides the following parameters for this inter-UE physical channel (e.g., PSSCH/PSCCH) transmission:

- the resource pool from which the resources are to be reported;
- L1 priority, $prio_{TX}$;
- the remaining packet delay budget;
- the number of sub-channels to be used for the inter-UE physical channel (e.g., PSSCH/PSCCH) transmission in a slot, $L_{subCH}$;
- optionally, the resource reservation interval, $P_{rsvp\_TX}$, in units of msec.
- if the higher layer requests the UE to determine a subset of resources from which the higher layer will select resources for inter-UE physical channel (e.g., PSSCH/PSCCH) transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.

- it is up to UE implementation to determine the subset of resources as requested by higher layers before or after the slot $r_i'' - T_3$, where $r_i''$ is the slot with the smallest slot index among $(r_0, r_1, r_2, ...)$ and $(r_0', r_1', r_2', ...)$, and $T_3$ is equal to $T_{proc,1}^{SL}$, where $T_{proc,1}^{SL}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $pj = prio_{TX}$.
- sl-RS-ForSensing selects if the UE uses the inter-UE physical shared channel (e.g., PSSCH)-RSRP or inter-UE physical control channel (e.g., PSCCH)-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P_{rsvp\_TX}'$.

Notation:

$(t_0'^{SL}, t_1'^{SL}, t_2'^{SL}, ...)$ may denote the set of slots which belongs to the sidelink resource pool.

For example, a UE may select a set of candidate resources (Sa) based on a procedure described below. For example, when resource (re)selection is triggered, a UE may select a candidate resource set (Sa) based on a procedure described below. For example, when re-evaluation or pre-emption is triggered, a UE may select a candidate resource set (Sa) based on a procedure described below.

The procedure below may be used.

1) A candidate single slot resource for transmission $R_{x,y}$ is defined as a set of $L_{subCH}$ contiguous subchannels with subc hannel x+j in slot t'^SL_y where j=0, ..., $L_{subCH}$. The UE shall assume that any set of $L_{subCH}$ contiguous subchannels included in t he corresponding resource pool within the time interval $[n + T_1, n + T_2]$ correspond to one candidate single slot resource.

selection of $T_1$ is up to UE implementation under $0 \leq T \leq$ T^SL_proc,1, where T^SL_proc,1 may be predefined. if $T_{2min}$ is shorter than the remaining packet delay budget (in slots) then $T_2$ is up to UE implementation subje ct to $T_{2min} \leq T_2 \leq$ remaining packet delay budget (in slots); otherwise $T_2$ is set to the remaining packet delay budget (i n slots).
The total number of candidate single-slot resources may be denoted by $M_{total}$.

2) The sensing window is defined by the range of slots $[n-T_0, n-$T^SL_proc,0) where $T_0$ may be predefined above and T^SL_proc,0 may be predefined. The UE shall monitor slots which belongs to a sidelink resource pool within the sensing window except for those in which its own transmissions occur. The UE shall perform the behaviour in the following steps based on inter-UE physical control channel (e.g., PSCCH) decoded and RSRP measured in these slots.
3) The internal parameter Th($p_i, p_j$) may be set to the corresponding value of RSRP threshold indicated by the i-th field in sl-Thres-RSRP-List, where i = $p_i + (p_j - 1) * 8$.
4) The set $S_A$ may be initialized to the set of all the candidate single-slot resources.
5) The UE shall exclude any candidate single-slot resource $R_{x,y}$ from the set $S_A$ if it meets all the following conditions:

the UE has not monitored slot t'^SL_m in Step 2.

for any periodicity value allowed by the higher layer parameter sl-ResourceReservePeriodList and a hypothetical SCI format 1-A received in slot t'^SL_m with 'Resource reservation period' field set to that periodicity value and indicating all subchannels of the resource pool in this slot, condition c in step 6 would be met.

5a) If the number of candidate single-slot resources $R_{x,y}$ remaining in the set $S_A$ may be smaller than $X*M_{total}$, the set $S_A$ may be initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot t'^SL_m, and 'Resource reservation period' field, if present, and 'Priority' field in the received SCI format 1-A indicate the values $P_{rsvp\_RX}$ and $prio_{RX}$, respectively;

b) the RSRP measurement performed for the received SCI format 1-A, is higher than $Th(prio_{RX}, prio_{TX})$;

c) the SCI format received in slot t'^SL_m or the same SCI format which, if and only if the 'Resource reservation period' field is present in the received SCI format 1-A, may be assumed to be received in slot(s) t'^SL_m+q*$P'_{rsvp\_RX}$ determines the set of resource blocks and slots which overlaps with $R_{x, y+j*(P'\_rsvp\_TX)}$ for q=1, 2, ..., Q and j=0, 1, ..., $C_{resel}$-1. Here, $P'_{rsvp\_RX}$ may be $P_{rsvp\_RX}$ converted to units of logical slots, Q may be an up rounded value of $T_{scal}/R_{esvp\_RX}$ if $P_{rsvp\_RX} < T_{scal}$ and n'-m ≤ $P'_{rsvp\_RX}$, where t'^SL_n'=n if slot n belongs to the set (t'^SL_0, t'^SL_1, ..., t'^SL_$T'_{max}$-1), otherwise slot t'^SL_n' may be the f irst slot after slot n belonging to the set (t'^SL_0, t'^SL_1, ..., t'^SL_$T'_{max}$-1); otherwise Q=1. $T_{scal}$ may be set to select ion window size $T_2$ converted to units of msec.

7) If the number of candidate single-slot resources remaining in the set $S_A$ is smaller than $X \cdot M_{total}$, then $Th(p_i, p_j)$ may be increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executin g steps 1)-7), i.e. including all necessary increments for reaching $X \cdot M_{total}$, and

- the associated priority $prio_{RX}$, satisfies one of the following conditions:

-- sl-PreemptionEnable may be provided and may be equal to 'enabled' and $prio_{TX} > prio_{RX}$

-- sl-PreemptionEnable may be provided and may be not equal to 'enabled', and $prio_{RX} < prio_{pre}$ and pri o$_{TX} > prio_{RX}$.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise

- DMRS pattern - ceiling ($\log_2 N_{pattern}$) bits, where $N_{pattern}$ is the number of DMRS patterns configured by higher layer parameter sl-PSSCH-DMRS-TimePatternList
- 2$^{nd}$-stage SCI format - 2 bits as defined in Table 3
- Beta_offset indicator - 2 bits as provided by higher layer parameter sl-BetaOffsets2ndSCI
- Number of DMRS port - 1 bit as defined in Table 4
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 3]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 4]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 5
- CSI request - 1 bit

[Table 5]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

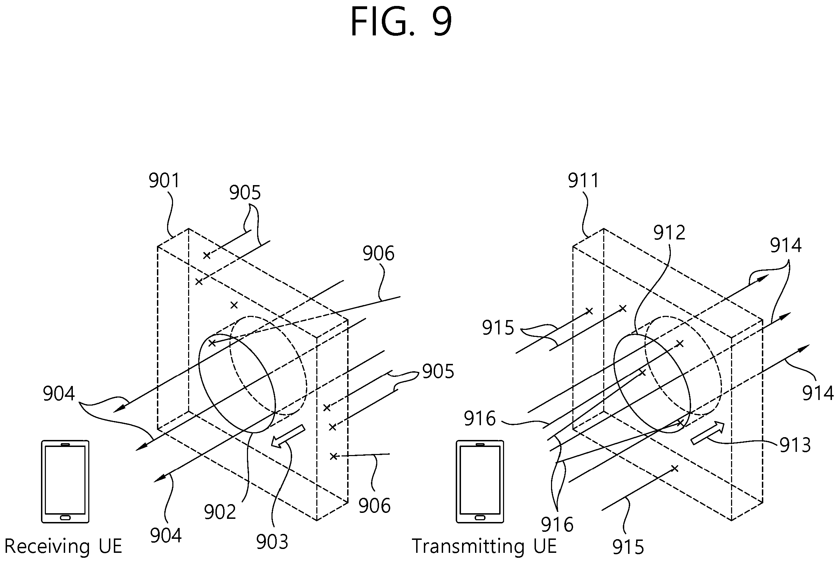

FIG. 9 shows a transmission spatial filter and a reception spatial filter, according to one embodiment of the present disclosure. The embodiment of FIG. 9 may be combined with various embodiments of the present disclosure.

Referring to FIG. 9, a reception spatial filter 901 used by a receiving UE for a reception operation and a transmission spatial filter 911 used by a transmitting UE for a transmission operation are shown.

For example, a reception spatial filter may only pass signals with the same beam direction as 903. That is, the receiving UE may only receive a transmission performed based on a beam with the direction of 903.

Thus, transmissions of 906 transmitted based on a beam with a different beam direction than the beam direction of 903 may not pass the reception spatial filter. 904 is a signal transmitted based on a beam with the same beam direction as 903, which may pass the reception spatial filter and be received by a receiving UE.

For example, a reception spatial filter may have a beam size/width of 902 and may only pass signals that are performed based on a beam that is included within the beam size/width. That is, a receiving UE may only receive transmissions that are performed based on a beam with a size/width that is included within the beam size/width of 902.

Thus, transmissions of 905 that contacted the reception spatial filter outside of the size/width of 902 may not pass the reception spatial filter among signal components transmitted based on a beam of a size/width greater than the size/width of 902. Since 904 has contacted the reception spatial filter in a region included in the size/width of 902, it may pass through the reception spatial filter and be received by a receiving UE. On the other hand, 905 has contacted the reception spatial filter outside of the size/width of 902, and therefore cannot pass the reception spatial filter and cannot be received by the receiving UE.

For example, 904 may be received by the receiving UE since its direction is the same as the direction of the beam 903 through which the reception spatial filter passes, and since it contacts the reception spatial filter in a range that is included in the size/width of 902. Here, for example, if the transmissions of 904 are all of the transmitted components based on a specific beam (i.e., all of the signal components transmitted along with 904 are successfully received by the receiving UE), then the reception spatial filter may be a spatial filter that covers the transmission spatial filter related to the specific beam.

For example, a transmission spatial filter may only pass signals that are the same as the beam direction of 913. In other words, when a transmission UE performs a transmission operation based on the transmission spatial filter, the signal components 914 that pass through the transmission spatial filter and are finally transmitted may all have the direction of 913.

Thus, transmissions of 916 transmitted based on a beam that is different from the beam direction of 913 may not pass through the transmission spatial filter. Signal components 914 with the same beam direction as 913 may pass through the transmission spatial filter and be transmitted to a receiving UE.

For example, a transmission spatial filter may have a beam size/width of 912, and may only pass signal components that are included within the beam size/width. That is, when a transmission UE performs a transmission operation based on the transmission spatial filter, only signal components that are included within the beam size/width of 912 may be passed through the transmission spatial filter and finally transmitted.

Thus, signal components that are not included in the size/width of 912 may not pass through the transmission spatial filter. Since 914 are signal components that are included in the size/width of 912, they may pass through the transmission spatial filter and be transmitted to a receiving UE. On the other hand, 915 are signal components that are not included in the size/width of 912 and therefore cannot pass through the transmission spatial filter and be transmitted to the receiving UE.

For example, the direction of 914 is the same as the beam direction 913 through which the transmission spatial filter passes, and the signal components included in the size/width of 912, it may be transmitted to a receiving UE. Here, for example, if the transmissions of 914 all pass through a reception spatial filter used by a receiving UE for receive operation (i.e., if the direction of the signal components of 914 is the same as the beam direction related to the reception spatial filter, and the signal components of 914 are all included in the size/width of the reception spatial filter), then the reception spatial filter may be a spatial filter that covers the transmission spatial filter of 911.

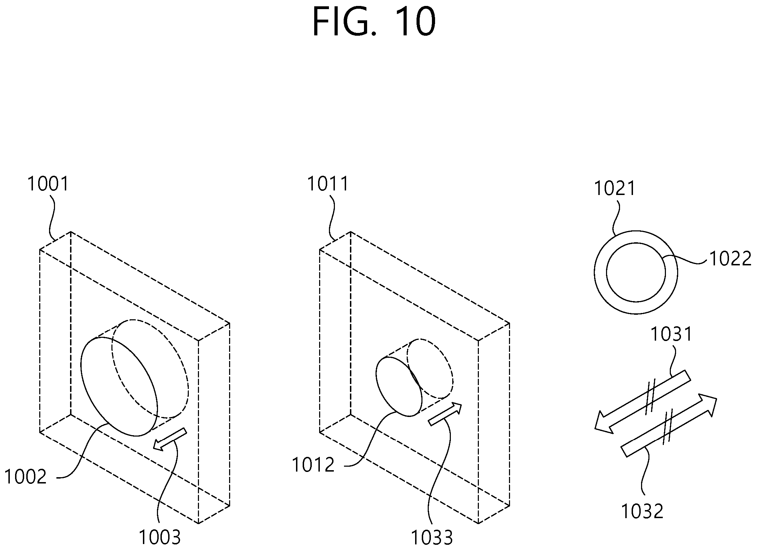

FIG. 10 shows a method for determining whether a reception spatial filter covers a transmission spatial filter, according to one embodiment of the present disclosure. The embodiment of FIG. 10 may be combined with various embodiments of the present disclosure.

Referring to FIG. 10, a reception spatial filter 1001 used by a receiving UE for a reception operation and a transmission spatial filter 1011 used by a transmitting UE for a transmission operation are shown.

For example, the direction of the signal components passed by the reception spatial filter may be 1003, and the direction of the signal components transmitted through the transmission spatial filter may be 1013. For example, the reception beam direction related to the reception spatial filter may be 1003, and the transmission beam direction related to the transmission spatial filter may be 1013.

For example, the size/width of the reception filter may be 1002. That is, the reception spatial filter passes only those signal components included in the 1002, and only those signal components that pass through the reception spatial filter may be received by a receiving UE.

For example, the size/width of the transmission spatial filter may be 1012. That is, the transmission spatial filter passes only those signal components included in the 1012, and only those signal components that pass through the transmission spatial filter may be transmitted to a receiving UE.

1021 and 1022 are cross sections of the size/width of a transmission spatial filter or the size/width of a reception spatial filter.

For example, if the 1021 is the size/width of a transmission spatial filter, the 1022 is the size/width of a reception spatial filter, and since the 1022 is included in the 1021, the size/width of the transmission spatial filter is larger than the size/width of the reception spatial filter, some of the signal components that pass through the transmission spatial filter and are transmitted to a receiving UE may not pass through the reception spatial filter. In this case, the reception spatial filter may be a spatial filter that does not cover the transmission spatial filter.

Conversely, for example, if the 1021 is the size/width of a reception spatial filter, the 1022 is the size/width of a transmission spatial filter, and since the 1022 is included in the 1021, the size/width of the transmission spatial filter is smaller than the size/width of the reception spatial filter, all of the signal components transmitted through the transmission spatial filter to a receiving UE may pass through the reception spatial filter. In this case, the reception spatial filter may be a spatial filter that covers the transmission spatial filter.

1031 represents 1003, i.e., the reception beam direction related to the reception spatial filter, and 1032 represents 1013, i.e., the transmission beam direction related to the transmission spatial filter. For example, as shown in the figure, since only when 1031 and 1032 are horizontal may all signal components transmitted by a transmitting UE based on the transmitting spatial filter pass through a receiving spatial filter, the receiving spatial filter may be the to be a spatial filter that covers the transmitting spatial filter when all signal components transmitted by the transmitting UE based on the transmitting spatial filter pass through the receiving spatial filter only when 1031 and 1032 are horizontal.

Meanwhile, in inter-UE communication (e.g., SL communication), a UE may perform transmission and/or reception operations based on multiple panels and/or beam directions, and in this case, it may be necessary to define a method for managing configuration of information related to the beam or a spatial domain transmission and/or reception filter, etc. (hereinafter, a beam management method). Here, for example, the beam management method may include a measurement and reporting procedure for a transmission beam and a reception beam pair between UEs.

For example, a transmitting UE may transmit a reference signal for beam measurement, and a receiving UE may perform a measurement and/or reporting operation based on a resource on which the reference signal is transmitted. Here, through the measurement and/or reporting procedure, an optimal pair of a transmit beam and a receive beam between the transmitting UE and the receiving UE may be determined.

For example, hereinafter, a method and a device for transmitting a reference signal for beam measurement are proposed in the present disclosure. For example, hereinafter, in the present disclosure, a transmit beam and/or a receive beam may mean a transmission and/or reception filter in a spatial domain. For example, hereinafter, in the present disclosure, a resource pool may mean a resource set composed of one or more transmission resource(s) and/or slot(s). For example, features described hereinafter in the present disclosure may be extended and applied to a (pre-configured) inter-UE signal (e.g., an SL signal) (e.g., a sensing signal, etc.) transmission and/or reception operation.

For example, in the present disclosure, that a resource is transmitted may include that a signal is transmitted through the corresponding resource. For example, in the present disclosure, that a resource is transmitted may include that a signal is transmitted using the corresponding resource.

[Proposal #01]

According to an embodiment of the present disclosure, a method by which a UE transmits a reference signal for beam measurement and/or a resource for beam reporting may be proposed. For example, the transmission may be performed using one or more of the following methods.

(Option 1) For example, a reference signal for beam measurement may be transmitted in a (dedicated) resource pool (hereinafter, a first resource pool). For example, a resource for beam reporting may be transmitted in an inter-UE physical feedback channel (e.g., PSFCH; physical sidelink feedback channel) region configured in the first resource pool.

(Option 2) For example, a reference signal for beam measurement may be transmitted in a (dedicated) resource pool (hereinafter, a first resource pool). For example, a resource for beam reporting may be transmitted in an inter-UE physical channel (e.g., PSCCH/PSSCH) region in a (shared) resource pool (hereinafter, a second resource pool).

(Option 3) For example, a trigger signal for a reference signal for beam measurement may be transmitted in a (dedicated) resource pool (hereinafter, a first resource pool). For example, a reference signal for beam measurement may be transmitted in a (shared) resource pool (hereinafter, a second resource pool). For example, a resource for beam reporting may be transmitted in an inter-UE physical feedback channel (e.g., PSFCH) region in the (shared) resource pool (hereinafter, the second resource pool).

Here, for example, a dedicated resource pool may mean a resource set exclusively allocated for transmission of a specific type of signal, and a shared resource pool may mean a resource set that may be shared for transmission of various types of signals.

Here, for example, an inter-UE physical feedback channel (e.g., PSFCH) transmission occasion may be composed of a plurality of inter-UE physical feedback channel (e.g., PSFCH) transmission resource(s) corresponding to a plurality of reference signal(s) for beam measurement distinguished by different identifiers. For example, inter-UE physical feedback channel (e.g., PSFCH) transmission symbol(s) corresponding to each transmit beam in one inter-UE physical feedback channel (e.g., PSFCH) transmission occasion may exist separately.

Here, for example, a beam reporting resource may be determined based on one or more of the following information.

    1. identifier information for a reference signal for beam measurement
    2. resource allocation information for a reference signal for beam measurement
    3. resource allocation information for an inter-UE physical channel (e.g., PSCCH/PSSCH) related to a reference signal for beam measurement
    4. control information indicated by an inter-UE physical channel (e.g., PSCCH/PSSCH) related to a reference signal for beam measurement
    5. beam and/or UE identifier information (e.g., a beam ID, a UE ID) related to a reference signal for beam measurement

According to an embodiment of the present disclosure, in a next-generation communication system, assuming that a UE performs inter-UE communication (e.g., SL communication), the UE may be (pre-)configured with resource(s) in a form of a resource pool that may be used for transmission and reception of data based on inter-UE communication (e.g., SL communication).

For example, a resource pool may be composed of consecutive physical resource block(s) (e.g., PRBs; physical resource blocks) in a frequency domain and non-contiguous slot(s) in a time domain, and may be defined within a partial bandwidth (e.g., a BWP; bandwidth part) configured for inter-UE communication (e.g., SL communication). Here, the resource pool may be composed of consecutive sub-channel(s) in the frequency domain, and each sub-channel may be composed of a plurality of physical resource block (e.g., PRB) group(s).

Here, the resource pool may support an inter-UE physical feedback channel (e.g., PSFCH) for supporting a feedback operation (e.g., HARQ-ACK feedback) for unicast and/or groupcast transmission. For example, in conventional inter-UE communication (e.g., SL communication), an inter-UE physical feedback channel (e.g., PSFCH) resource) for feedback (e.g., HARQ-ACK feedback) may be (pre-)configured in a resource pool per resource pool.

Here, for example, when a UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, for example, a dedicated resource pool may mean a resource set exclusively allocated for transmission of a specific type of signal, and a shared resource pool may mean a resource set that may be shared for transmission of various types of signals.

For example, in order to reduce a beam measurement time, a reference signal for beam measurement being transmitted based on a plurality of beams within a slot may be allowed. Here, conventional inter-UE communication UEs (e.g., SL communication UEs) may perform a reception algorithm assuming application of a single beam within a slot when receiving data or the like. Accordingly, in order not to affect receiving UEs assuming application of the single beam, it may be preferable that a reference signal for beam measurement supporting transmission based on a plurality of beams within a slot be transmitted through a dedicated resource pool. Accordingly, it may be preferable that a reference signal for beam measurement be transmitted through a dedicated resource pool.

(Option 1) For example, here, a resource for a beam report corresponding to the reference signal for beam measurement may be transmitted through a dedicated resource pool and/or a shared resource pool. For example, a resource for a beam report may be transmitted through an inter-UE physical feedback channel (e.g., PSFCH) resource configured for a dedicated resource pool in which a reference signal for beam measurement is transmitted.

(Option 2) For example, alternatively, a reference signal for beam measurement may be transmitted through a dedicated resource pool, and a resource for a beam report may be transmitted through a shared resource pool in order to reduce additional signal transmission load. For example, when a reference signal for beam measurement is transmitted in a shared resource pool, it may be transmitted through an inter-UE physical channel (e.g., PSCCH/PSSCH) resource.

Here, for example, when transmission based on a plurality of beams within a slot for a reference signal for beam measurement is not supported, a reference signal for beam measurement may be transmitted in a shared resource pool. For example, the reference signal for beam measurement may be included in an inter-UE physical channel (e.g., PSCCH/PSSCH) transmission through which a direct communication request (e.g., DCR; direct communication request) message is transmitted and may be transmitted in a plurality of slots corresponding to a plurality of beams.

Here, for example, in order for a receiving UE to perform measurement on transmit beam and receive beam pair(s) based on a reference signal for beam measurement, the receiving UE may need to know in advance a slot in which the reference signal for beam measurement is transmitted and beam information in the corresponding slot and may need to prepare a receive beam corresponding to the beam.

For example, a slot in which a reference signal for beam measurement is transmitted and a beam direction may be pre-configured, but in this case, since a plurality of slot(s) in which a reference signal for beam measurement may be transmitted in a shared resource pool need to be allocated as dedicated resources, a problem in that efficiency of resource utilization decreases may occur.

(Option 3) For example, therefore, in the present disclosure, a trigger signal for a reference signal for beam measurement is transmitted in a (dedicated) resource pool (hereinafter, a first resource pool), and a reference signal for beam measurement and/or a resource for a beam report is transmitted in a (shared) resource pool (hereinafter, a second resource pool).

Here, for example, a trigger signal for a reference signal for beam measurement may support transmission based on a plurality of beams within a slot in order to reduce load according to signal transmission. Here, a resource for a beam report may be transmitted in an inter-UE physical feedback channel (e.g., PSFCH) region in a (shared) resource pool (hereinafter, a second resource pool). For example, when a reference signal for beam measurement is included in an inter-UE physical channel (e.g., PSCCH/PSSCH) transmission through which a direct communication request (e.g., DCR) message is transmitted, an inter-UE physical feedback channel (e.g., PSFCH) resource corresponding to the inter-UE physical channel (e.g., PSCCH/PSSCH) may be used as a resource for a beam report.

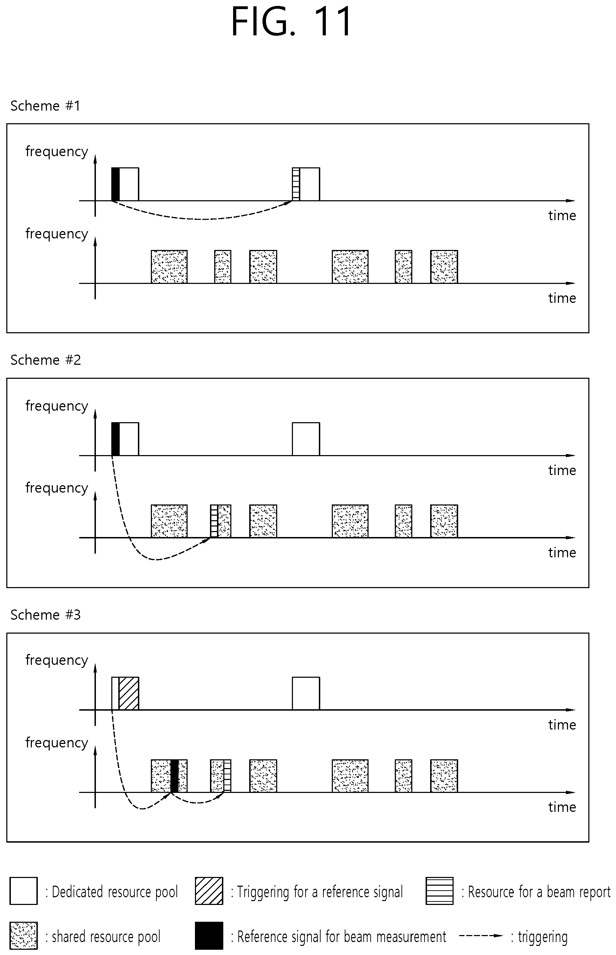

FIG. 11 shows a beam measurement operation performed using a separately defined dedicated resource pool and a shared resource pool according to an embodiment of the present disclosure. The embodiment of FIG. 11 may be combined with various embodiments of the present disclosure.

Referring to FIG. 11, when a dedicated resource pool and a shared resource pool for inter-UE communication (e.g., SL communication) between UEs are distinguished in a time domain, operations according to a proposed option of the present disclosure are shown. Here, scheme #1 shows a case in which both a reference resource for beam measurement and a resource for a beam report are transmitted in a dedicated resource pool, scheme #2 shows a case in which a reference resource for beam measurement is transmitted in a dedicated resource pool and a resource for a beam report is transmitted in a shared resource pool, and scheme #3 shows a case in which a trigger signal is transmitted in a dedicated resource pool and a reference resource for beam measurement and a resource for a beam report are transmitted in a shared resource pool.

Here, for example, in scheme #2, when a resource for a beam report is transmitted in a (shared) resource pool, a problem in that a beam of a resource region in which the resource for a beam report is transmitted is constrained may occur. For example, when a UE transmits a resource for a beam report for a reference signal for beam measurement, a beam direction transmitting the resource for a beam report may have a beam correspondence relationship with a receive beam determined for the reference signal for beam measurement.

Here, for example, when a UE transmits a resource for a beam report through an inter-UE physical feedback channel (e.g., PSFCH) resource in a (shared) resource pool, a beam direction of the inter-UE physical feedback channel (e.g., PSFCH) resource may be constrained and may affect inter-UE physical feedback channel (e.g., PSFCH) resource transmission for data. Accordingly, in the present disclosure, unlike the above, a method is proposed in which a reference signal for beam measurement is transmitted in a (shared) resource pool (hereinafter, a first resource pool), and a resource for a beam report is transmitted in a (dedicated) resource pool (hereinafter, a second resource pool).

For example, the UE may transmit a reference signal for beam measurement together with an inter-UE physical channel (e.g., PSCCH/PSSCH) transmission through which a direct communication request (e.g., DCR) message is transmitted in a (shared) resource pool, and may transmit a resource for a beam report corresponding to the reference signal for beam measurement in a (dedicated) resource pool. Here, the UE may fully utilize an inter-UE physical feedback channel (e.g., PSFCH) resource in a (shared) resource pool for feedback (e.g., HARQ feedback) for data.

For example, the above [Proposal #01] may be applied in combination with other proposal(s) within a range in which operations of the present disclosure do not conflict.

[Proposal #02]

According to an embodiment of the present disclosure, in a method by which a UE transmits a reference signal for beam measurement and/or a resource for a beam report, when a resource pool (hereinafter, a first resource pool) in which a signal triggering transmission of a reference signal for beam measurement (or a resource for a beam report) is transmitted and a resource pool (hereinafter, a second resource pool) in which a reference signal for beam measurement (or a resource for a beam report) is transmitted are different from each other, a method for calculating timing of a transmission resource may be provided as follows.

1. convert a trigger time point in a first resource pool into a physical slot index
2. determine a reference time point in a second resource pool corresponding to the physical slot index
Here, for example, a reference time point (reference time point, reference resource) in a second resource pool may be a slot among slot(s) in the second resource pool having a physical slot index equal to or greater than a physical slot index, the slot having a smallest physical slot index. For example, a reference time point (reference time point, reference resource) in the second resource pool may be a slot among slot(s) in the second resource pool having a physical slot index equal to or less than a physical slot index, the slot having a greatest physical slot index.
3. determine a transmission timing (in a second resource pool) based on a reference time point in the second resource pool

Here, for example, a transmission timing may be defined as a number of logical slots to a transmission time point based on a reference time point in a second resource pool. For example, a transmission timing may be one of (pre-) configured transmission time points determined in an earliest or pre-agreed manner based on the reference time point in the second resource pool.

Here, a signal triggering transmission of a reference signal for beam measurement (or a resource for a beam report) may be in a form of an inter-UE physical channel (e.g., PSCCH and/or PSSCH) and/or a reference signal (e.g., RS; reference signal).

Here, a signal triggering transmission of a reference signal for beam measurement (or a resource for a beam report) may include time domain offset information, and a UE may determine a reference time point in a second resource pool by combining a physical slot index of a trigger time point in a first resource pool and/or the offset information.

According to an embodiment of the present disclosure, in a next-generation communication system, assuming that a UE performs inter-UE communication (e.g., SL communication), the UE may be (pre-)configured with resource(s) in a form of a resource pool that may be used for transmission and reception of data based on inter-UE communication (e.g., SL communication).

For example, a resource pool may be composed of consecutive physical resource blocks (e.g., PRB; physical resource blocks) in a frequency domain and non-contiguous slots in a time domain, and may be defined within a partial bandwidth (e.g., BWP; bandwidth part) configured for inter-UE communication (e.g., SL communication). Here, a resource pool may be composed of consecutive sub-channel(s) in the frequency domain, and each sub-channel may be composed of a plurality of physical resource block (e.g., PRB) group(s).

Here, a resource pool may support an inter-UE physical feedback channel (e.g., PSFCH) for a purpose of supporting a feedback operation (e.g., HARQ-ACK feedback) for unicast and/or groupcast transmission. For example, in conventional inter-UE communication (e.g., SL communication), an inter-UE physical feedback channel (e.g., PSFCH) resource for feedback (e.g., HARQ-ACK feedback) may be (pre-)configured in a resource pool per resource pool.

Here, for example, when a UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, for example, a resource pool (hereinafter, a first resource pool) in which a signal triggering transmission of a reference signal for beam measurement (or a resource for a beam report) is transmitted and a resource pool (hereinafter, a second resource pool) in which a reference signal for beam measurement (or a resource for a beam report) is transmitted may be configured differently.

For example, a UE may transmit a reference signal for beam measurement in a dedicated resource pool (hereinafter, a first resource pool) for a purpose of supporting transmission based on a plurality of beams within a slot, and may transmit a resource for a beam report triggered by the reference signal for beam measurement in a shared resource pool (hereinafter, a second resource pool) shared with data transmission for a purpose of reducing signal transmission load.

Here, a method for determining transmission timing between a signal triggering transmission of a reference signal for beam measurement (or a resource for a beam report) transmitted in the first resource pool and a reference signal for beam measurement (or a resource for a beam report) transmitted in a second resource pool may need to be defined.

Here, for example, a trigger time point may follow an indicated time point in a first resource pool, but a transmission timing may preferably be defined using time resource(s) of a second resource pool in which actual transmission is performed.

According to the existing technology, assuming that a first resource pool provides candidate resources for a reference signal for beam measurement and a second resource pool provides candidate resources for a resource for a beam report triggered by the reference signal for beam measurement, when transmission timing for the resource for a beam report is determined based on the first resource pool, inappropriate time resolution may be obtained because transmission timing of the resource for a beam report is determined in a transmission unit of the reference signal for beam measurement. Accordingly, in the present disclosure, when a resource pool (hereinafter, a first resource pool) in which a signal triggering transmission of a reference signal for beam measurement (or a resource for a beam report) is transmitted and a resource pool (hereinafter, a second resource pool) in which a reference signal for beam measurement (or a resource for a beam report) is transmitted are different from each other, a method for calculating timing of a transmission resource according to the following procedure is proposed.

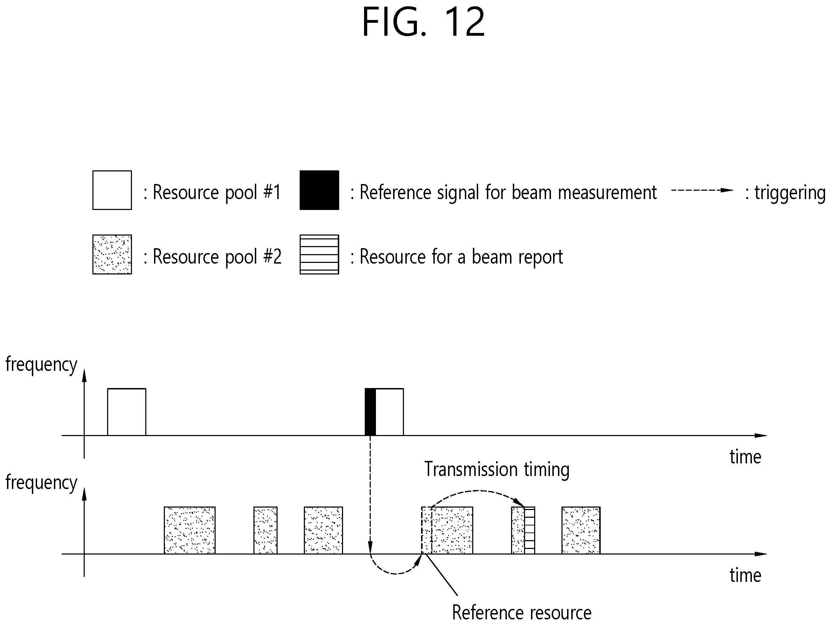

FIG. 12 shows transmission timing of a reference signal for beam measurement and a resource for a beam report according to an embodiment of the present disclosure. The embodiment of FIG. 12 may be combined with various embodiments of the present disclosure.

Referring to FIG. 12, as a first step of a process of determining a resource for a beam report, a UE may convert a trigger time point in a first resource pool into a physical slot index.

Next, the UE may determine a reference time point in a second resource pool corresponding to the physical slot index. For example, a reference time point in a second resource pool may be a slot among slot(s) in the second resource pool having a physical slot index equal to or greater than the physical slot index, the slot having a smallest physical slot index. For example, a reference time point in a second resource pool may be a slot among slot(s) in the second resource pool having a physical slot index equal to or less than the physical slot index, the slot having a greatest physical slot index.

Finally, the UE may determine a transmission timing (in a second resource pool) based on a reference time point in the second resource pool. For example, the transmission timing may be defined as a number of logical slots to a transmission time point based on the reference time point in the second resource pool. For example, the transmission timing may be one of (pre-)configured transmission time points determined in an earliest or pre-agreed manner based on the reference time point in the second resource pool.

Here, for example, when a resource for a beam report is transmitted in a form of an inter-UE physical feedback channel (e.g., PSFCH) (or an inter-UE physical channel (e.g., PSCCH/PSSCH)) resource in a (shared) resource pool, a frequency resource region and/or a resource block (e.g., RB; resource block) set configured for a resource region of the inter-UE physical feedback channel (e.g., PSFCH) (or the inter-UE physical channel (e.g., PSCCH/PSSCH)) for a beam report may be configured independently of a frequency resource region and/or a resource block (e.g., RB; resource block) set for a conventional inter-UE physical feedback channel (e.g., PSFCH) resource (or an inter-UE physical channel (e.g., PSCCH/PSSCH)) region. Through this, collision between conventional feedback resources and a resource for a beam report may be avoided.

Here, a signal triggering transmission of a reference signal for beam measurement (or a resource for a beam report) may include time domain offset information, and a UE may determine a reference time point in a second resource pool by combining a physical slot index of a trigger time point in a first resource pool and/or the offset information. Here, the offset information may be used for a purpose of preventing a phenomenon in which trigger(s) in the first resource pool have an identical reference time point in the second resource pool. For example, different additional time domain offsets may be allocated to trigger(s) having adjacent physical slot indices so that reference time points in the second resource pool are distributed.

For example, the above [Proposal #02] may be applied in combination with other proposal(s) within a range in which operations of the present disclosure do not conflict.

[Proposal #03]

According to an embodiment of the present disclosure, in a method by which a UE transmits a reference signal for beam measurement and/or a resource for a beam report, a method of defining (consecutive) N slot(s) capable of transmitting M reference signal(s) for beam measurement and/or resource(s) for a beam report (within a slot) as one slot group, and the slot group as a basic transmission unit of (beam sweeping-based) reference signal transmission for beam measurement may be provided.

For example, in a sensing procedure and/or a resource selection procedure and/or a resource allocation procedure for (beam sweeping-based) transmission of a reference signal for beam measurement, the slot group may be defined as a basic transmission unit.

Here, for example, the M may be configured based on (pre-)configuration and/or PC5-RRC signaling. Here, for example, the N may be configured based on (pre-)configuration and/or PC5-RRC signaling.

Here, an identifier j for an i = 0, 1, ..., (M*N)-1-th reference signal for beam measurement in the slot group may be determined through one or more of the following methods. Here, for example, for an identical identifier, an identical spatial filter and/or beam may be applied.

1. j = (i mod P)
Here, the P may be configured based on (pre-)configuration and/or PC5-RRC signaling. For example, the P may mean a number of different transmit beams and may be a divisor of M*N.
2. j = floor (i / Q)

Here, the Q may be configured based on (pre-)configuration and/or PC5-RRC signaling. For example, the Q may mean a number of different receive beams and may be a divisor of M*N.

Here, an identifier allocation scheme for reference signal(s) for beam measurement in the slot group may be configured based on (pre-)configuration and/or PC5-RRC signaling.

Here, the slot group may be composed of (consecutive) slot(s) in a resource pool configured for inter-UE communication (e.g., SL communication).

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report. Here, when the UE supports P transmit beams (or spatial filters) and Q receive beams (or spatial filters), P*Q transmit beam and receive beam pairs may exist between UEs, and P*Q measurements may be required.

Here, when a reference signal for beam measurement is transmitted only once per slot, P*Q slot(s) may be required for the P*Q measurements, and signal transmission load for beam measurement may be very high. Here, when signal transmission load for beam measurement is greater than system performance obtained through beam management, overall system performance according to support of beam management may rather be degraded. Accordingly, in the present disclosure, in a method by which a UE transmits a reference signal for beam measurement and/or a resource for a beam report, a method of defining (consecutive) N slot(s) capable of transmitting M reference signal(s) for beam measurement and/or resource(s) for a beam report (within a slot) as one slot group, and using the slot group as a basic transmission unit of (beam sweeping-based) reference signal transmission for beam measurement is proposed.

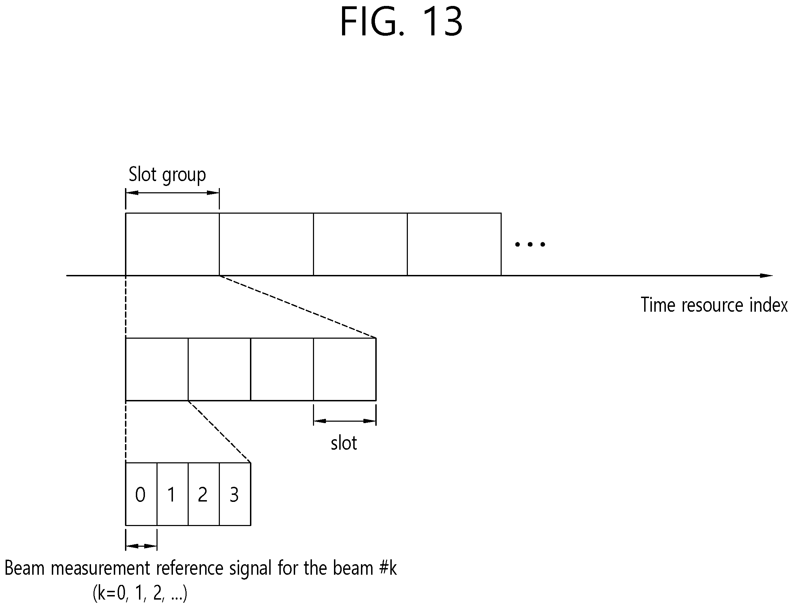

FIG. 13 shows a time domain transmission unit for beam sweeping-based transmission of a reference signal for beam measurement. The embodiment of FIG. 13 may be combined with various embodiments of the present disclosure.

Referring to FIG. 13, when a UE supports P transmit beams (or spatial filters) and Q receive beams (or spatial filters), M and N satisfying P*Q = M*N may be configured.

For example, when P=4 and Q=4, beam measurement for 16 transmit beam and receive beam pairs may be supported by causing reference signal(s) for beam measurement for 4 transmit beams per slot to be transmitted over a total of 4 slots. Here, for example, the slot group may be defined as a basic transmission unit of a sensing procedure and/or a resource selection procedure and/or a resource allocation procedure for (beam sweeping-based) transmission of a reference signal for beam measurement. For example, when a UE transmits a (beam sweeping-based) reference signal for beam measurement, the reference signal for beam measurement may be transmitted such that it starts at a boundary of the slot group.

For example, the above [Proposal #03] may be applied in combination with other proposal(s) within a range in which operations of the present disclosure do not conflict.

[Proposal #04]

According to an embodiment of the present disclosure, in a method by which a UE transmits a reference signal for beam measurement and/or a resource for a beam report, a method may be provided in which the UE transmits a control signal related to the reference signal for beam measurement and/or the resource for a beam report and transmits the control signal such that the control signal includes one or more of the following information.

1. transmission resource reservation information for a reference signal for beam measurement and/or a resource for a beam report
2. data transmission resource reservation information
3. transmit beam and/or receive beam reservation information

Here, for example, the control signal may be transmitted through an inter-UE physical channel (e.g., PSCCH/PSSCH). For example, the control signal may be first inter-UE control information (e.g., 1st SCI), second inter-UE control information (e.g., 2nd SCI), and/or a MAC (medium access control) control element (e.g., CE; control element).

Here, the transmit beam and/or receive beam reservation information may be provided based on an inter-UE physical feedback channel (e.g., PSFCH) transmission occasion (inter-UE physical feedback channel (e.g., PSFCH) occasion). For example, beam information pre-reserved per inter-UE physical feedback channel (e.g., PSFCH) transmission occasion being provided may mean that use of the beam is reserved in an inter-UE physical channel (e.g., PSCCH/PSSCH) transmission slot associated with the inter-UE physical feedback channel (e.g., PSFCH) transmission occasion.

Here, information included in the control signal may be information for an identical resource pool or information for another resource pool. For example, the control signal may be transmitted in a (dedicated) resource pool, and information indicated by the control signal may be information for a (shared) resource pool.

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, for example, when a UE transmits a reference signal for beam measurement and/or a resource for a beam report, the UE may transmit a control signal related to the reference signal for beam measurement and/or the resource for a beam report. For example, the UE may perform transmission of a reference signal for beam measurement and/or a resource for a beam report to which beam sweeping is applied within a slot in a dedicated resource pool in order to reduce beam measurement time. Here, for example, since, in the slot to which the beam sweeping is applied, transmission for all transmit beams of the transmitting UE is performed, the slot may be used for a broadcast data transmission purpose of the transmitting UE in addition to reference signal transmission for beam measurement and/or resource transmission for a beam report.

For example, a UE may transmit a control signal related to beam sweeping-based transmission of a reference signal for beam measurement and/or a resource for a beam report. Here, the control signal may include transmission resource reservation information for a reference signal for beam measurement and/or a resource for a beam report, and through this, transmission resource reservation information for the reference signal for beam measurement and/or the resource for a beam report may be known to other UEs.

Here, for example, the control signal may include data transmission resource reservation information and/or transmit/receive beam reservation information, and through this, transmission resource reservation information for a specific beam may be known to other UEs. Here, transmission resource reservation information for a reference signal for beam measurement and/or a resource for a beam report and/or data/beam may be used for avoidance of transmission resource collision between UEs and/or interference mitigation.

Here, for example, the control signal may be transmitted through an inter-UE physical channel (e.g., PSCCH/PSSCH). For example, the control signal may be first inter-UE control information (e.g., 1st SCI), second inter-UE control information (e.g., 2nd SCI), and/or a MAC control element (e.g., CE).

Here, the transmit beam and/or receive beam reservation information may be provided based on an inter-UE physical feedback channel (e.g., PSFCH) transmission occasion (inter-UE physical feedback channel (e.g., PSFCH) occasion). For example, beam information pre-reserved per inter-UE physical feedback channel (e.g., PSFCH) transmission occasion being provided may mean that use of the beam is reserved in an inter-UE physical channel (e.g., PSCCH/PSSCH) transmission slot related to the inter-UE physical feedback channel (e.g., PSFCH) transmission occasion.

For example, the above [Proposal #04] may be applied in combination with other proposal(s) within a range in which operations of the present disclosure do not conflict.

[Proposal #05]

According to an embodiment of the present disclosure, in a method by which a UE transmits a resource for a beam report, a method may be provided in which, when the UE transmits a beam report resource corresponding to a reference signal for beam measurement for a specific (transmit) beam, the UE transmits the beam report resource Q times repeatedly.

Here, for example, the Q may mean a number of (maximum) receive beams (or transmit beams) of a UE and may be configured based on (pre-)configuration and/or PC5-RRC signaling.

Here, for example, when the UE transmits a resource for a beam report corresponding to a specific transmit beam, the UE may transmit by applying a transmit beam having a beam correspondence relationship with a receive beam determined for a reference signal for beam measurement transmitted through the corresponding transmit beam or a transmit beam included in a direction of the receive beam.

Here, the beam correspondence relationship may mean a case in which a transmit beam and a receive beam are an identical beam and/or a case in which a transmit beam and a receive beam correspond one-to-one.

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, when transmission and reception based on inter-UE communication (e.g., SL communication) between UEs is performed, channel reciprocity between a forward channel and a reverse channel may hold. For example, when a first UE and a second UE transmit and receive signals with each other, a reception strength when the second UE receives a signal transmitted by the first UE through a first beam through a second beam and a reception strength when the first UE receives a signal transmitted by the second UE through the second beam through the first beam may be similar. Here, a UE may predict an interference impact by using the channel reciprocity characteristic.

For example, in an example in which the first UE and the second UE exchange signals, the first UE may measure a reception strength when receiving, through a first beam, a signal transmitted by the second UE through a second beam, and may estimate, based on the reception strength, a magnitude of interference experienced by the second UE through the second beam when the first UE transmits through the first beam. Here, the signal transmitted by the second UE through the second beam may need to be transmitted at a relatively high frequency in order to support continuous interference impact measurement, and, for example, the signal may be a beam report resource corresponding to a reference signal for beam measurement for a specific (transmit) beam.

Here, for example, the first UE may measure interference impact for multiple transmit beams, and in the case, the second UE may repeatedly transmit a signal transmitted through a second beam, and the first UE may measure the signal transmitted through the second beam through different receive beams. Accordingly, in the present disclosure, in a method by which a UE transmits a resource for a beam report, a method is proposed in which, when transmitting a beam report resource corresponding to a reference signal for beam measurement for a specific (transmit) beam, the UE transmits the beam report resource Q times repeatedly. For example, when a UE receives a reference signal for beam measurement for P (transmit) beams Q times repeatedly per (transmit) beam, the UE may transmit a resource for a beam report corresponding to each of the P (transmit) beams Q times repeatedly.

For example, the above [Proposal #05] may be applied in combination with other proposal(s) within a range in which operations of the present disclosure do not conflict.

[Proposal #06]

According to an embodiment of the present disclosure, in a method by which a UE selects and/or allocates a transmission resource, a method may be provided in which one or more of the following procedure(s) are performed.

> 1. obtain past and/or reserved transmission resource information (hereinafter, first information) to which a specific beam (hereinafter, a first beam) is applied by receiving a reference signal and/or a control signal for beam measurement, transmitted (based on beam sweeping)
> 2. obtain reception strength and/or reception sensitivity information (hereinafter, second information) of feedback signal(s) corresponding to past transmission resource(s) to which a first beam is applied
> 3. select and/or allocate a transmission resource to be transmitted through a specific beam (hereinafter, a second beam) based on first information and/or second information

For example, when a reserved transmission resource (from another UE) according to first information is identified for a transmission candidate resource, the UE may use the transmission candidate resource for resource selection and/or allocation when feedback reception strength and/or reception sensitivity of the reserved transmission resource according to second information is equal to or less than a (specific) reference value (or threshold value), and may exclude it from the transmission candidate resource otherwise.

Here, for example, feedback signal(s) corresponding to past transmission resource(s) to which a first beam is applied may be transmitted using a transmit beam having a beam correspondence relationship with a receive beam determined for the first beam.

Here, for example, past transmission resource(s) to which a first beam is applied may be reference signal(s) for beam measurement, and feedback signal(s) corresponding thereto may be transmission resource(s) for a beam report.

Here, the UE may apply a receive beam having a beam correspondence relationship with a second beam when measuring reception strength and/or reception sensitivity corresponding to second information. Here, the reception strength and/or reception sensitivity may be used as a predicted value for an interference strength experienced by a UE receiving a first beam from the second beam.

Here, the beam correspondence relationship may mean a case in which a transmit beam and a receive beam are an identical beam and/or a case in which a transmit beam and a receive beam correspond one-to-one.

Here, the UE may select a preferred resource and/or a non-preferred resource based on first information and/or second information and may provide the preferred resource and/or the non-preferred resource to another UE.

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Meanwhile, in a multi-beam-based inter-UE communication (e.g., SL communication) system, when a UE (hereinafter, a first UE) intends to select a transmission resource for a specific (transmit) beam, if the first UE can know information for a transmission resource reserved by another UE (hereinafter, a second UE) (within a candidate resource set for transmission resource selection) (hereinafter, first information) and/or information for an expected interference impact given by the specific (transmit) beam of the first UE to a UE (hereinafter, a third UE) that receives the reserved transmission resource (hereinafter, second information), the first UE may reduce expected interference by excluding, from the candidate resource set, a transmission resource having a large expected interference impact and then selecting a transmission resource for the specific (transmit) beam. Through this, the first UE may perform more effective transmission resource selection for reducing interference impact based on the first information and/or the second information.

Here, for example, in a conventional inter-UE communication (e.g., SL communication) system in which use of an omni-directional transmission and/or receive beam is assumed, reception strength for a transmission resource of a second UE measured by a first UE (within a sensing interval) has been used as an indicator of an interference impact given by the first UE to a target UE of a third UE (i.e., a UE receiving from the second UE, a third UE). However, in a multi-beam-based inter-UE communication (e.g., SL communication) system assuming a directional beam, the above method may no longer be valid.

For example, when a second UE transmits and receives signals with a third UE, assume that a first UE measures a high reception strength for a transmission resource of the second UE through a receive beam corresponding to a specific transmit beam direction that the first UE intends to use for transmission. Here, the third UE may form a receive beam in a different direction (for example, an opposite direction) from that of the second UE, and in the case, while the second UE may be significantly affected by interference from the specific transmit beam of the first UE, the third UE may hardly be affected by interference from the specific transmit beam of the first UE.

In order to solve the above problem, in the present disclosure, in a method by which a UE selects and/or allocates a transmission resource, a method is proposed in which one or more of the following procedure(s) are performed.

First, a UE may obtain past and/or reserved transmission resource information (hereinafter, first information) to which a specific beam (hereinafter, a first beam) is applied by receiving a reference signal and/or a control signal for beam measurement, transmitted (based on beam sweeping) within a monitoring interval.

Next, the UE may obtain reception strength and/or reception sensitivity information (hereinafter, second information) of feedback signal(s) corresponding to past transmission resource(s) to which the first beam is applied. Here, for example, the past transmission resource(s) to which the first beam is applied may be reference signal(s) for beam measurement, and feedback signal(s) corresponding thereto may be transmission resource(s) for a beam report.

Finally, the UE may select and/or allocate a transmission resource to be transmitted using a specific beam (hereinafter, a second beam) based on first information and/or second information. For example, when a reserved transmission resource (from another UE) according to the first information is identified for a transmission candidate resource, if feedback reception strength and/or reception sensitivity of the reserved transmission resource according to the second information is equal to or less than a (specific) reference value (or threshold value), the UE may use the transmission candidate resource for resource selection and/or allocation, and otherwise may exclude the transmission candidate resource from the transmission candidate resource set.

Here, for example, feedback signal(s) corresponding to past transmission resource(s) to which the first beam is applied may be transmitted using a transmit beam having a beam correspondence relationship with a receive beam determined for the first beam. Here, for example, the UE may apply a receive beam having a beam correspondence relationship with the second beam when measuring reception strength and/or reception sensitivity corresponding to the second information. Here, for example, the reception strength and/or reception sensitivity may be used as a predicted value for an interference strength experienced from the second beam by a UE receiving the first beam. Here, for example, the UE may select a preferred resource and/or a non-preferred resource based on the first information and/or the second information and may provide the preferred resource and/or the non-preferred resource to another UE.

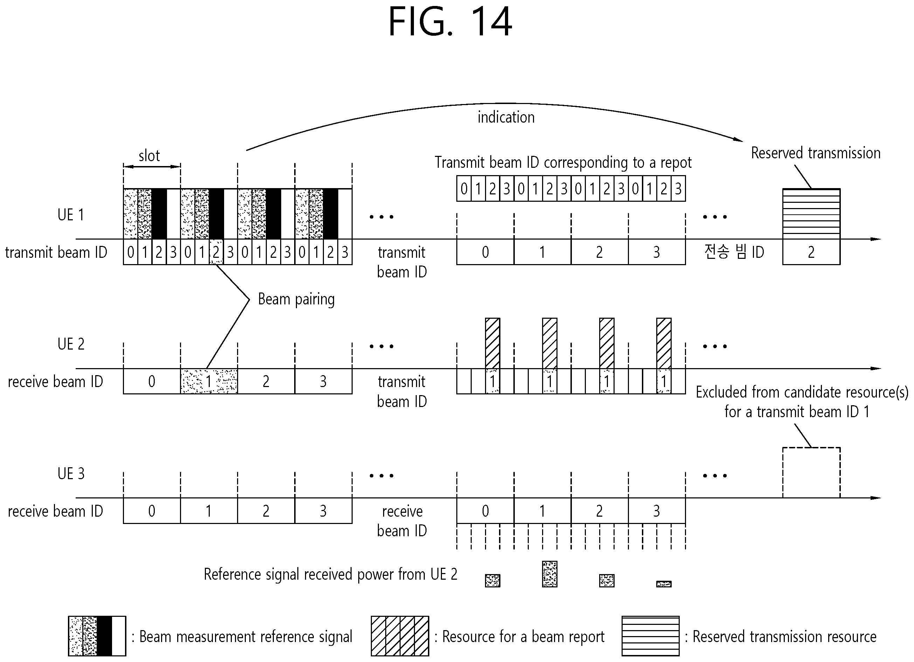

FIG. 14 shows a transmission resource selection procedure based on reception strength of a feedback channel according to an embodiment of the present disclosure. An embodiment of FIG. 14 may be combined with various embodiments of the present disclosure.

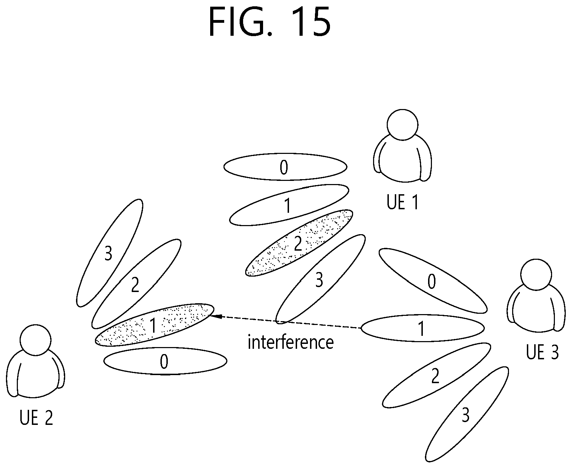

FIG. 15 shows transmit beams and receive beams used by UEs for inter-UE communication according to an embodiment of the present disclosure. An embodiment of FIG. 15 may be combined with various embodiments of the present disclosure.

Referring to FIG. 14 and FIG. 15, when a UE has four transmit beam(s) and four receive beam(s), operations according to a proposed method of the present disclosure are illustrated. First, UE 1 may transmit reference signal(s) for beam measurement for transmit beam ID #0, #1, #2, and #3 based on beam sweeping. Next, UE 2 may measure the reference signal(s) for beam measurement and determine a transmit beam and receive beam pair. In FIG. 15, it is assumed that UE 2 selects beam ID #2 of UE 1 and beam ID #1 of UE 2.

For example, UE 2 may repeatedly transmit a resource for a beam report through beam ID #1 of UE 2 determined above in a resource for a beam report corresponding to beam ID #2 of UE 1. Here, for example, Proposal #05 of the present disclosure may be applied to the repeated transmission.

Meanwhile, UE 3 may measure reception strength for a feedback channel of UE 2, that is, a resource for a beam report. In FIG. 15, UE 3 may measure the resource for a beam report of UE 2 with respect to receive beam ID #0, #1, #2, and #3, and when receiving the resource for a beam report of UE 2 corresponding to transmit beam ID #2 of UE 1 through receive beam ID #1 of UE 3, UE 3 may confirm that a high reception strength (for example, RSRP) is observed. Through this, when UE 1 schedules with transmit beam ID #2, UE 3 may predict that its transmit beam ID #1 will act as a potential interference source. Accordingly, when selecting a transmission resource for transmit beam ID #1, UE 3 may exclude transmission resource(s) reserved by UE 1 with transmit beam ID #2 or may lower a selection priority thereof. Here, for example, transmission resource reservation information for UE 1 may be obtained through a control signal transmitted together in slot(s) in which UE 1 transmits a reference signal for beam measurement based on beam sweeping.

For example, the above [Proposal #06] may be applied in combination with other proposal(s) within a range in which operations of the present disclosure do not conflict.

[Proposal #07]

According to an embodiment of the present disclosure, in a method by which a UE performs beam management, a method may be provided in which a beam failure indication (e.g., BFI; Beam Failure Indication) is triggered based on a discontinuous transmission (e.g., DTX) determination for a resource for a beam report.

Here, the UE may not consider a discontinuous transmission (e.g., DTX) determination for a feedback resource (e.g., an inter-UE physical feedback channel resource (e.g., a PSFCH resource)) for a feedback operation (e.g., a HARQ operation) in a beam failure indication (e.g., BFI) triggering procedure.

Here, the UE may determine whether to transmit a resource for a beam report based on a reception result and/or reception sensitivity for the resource for a beam report, and a case in which the UE determines non-transmission may be referred to as a discontinuous transmission (e.g., DTX) determination.

Here, when a beam failure indication (e.g., BFI) occurs a predetermined number of times or more, the UE may determine beam failure detection (e.g., BFD; Beam Failure Detection) and may perform a beam failure recovery (e.g., BFR; Beam Failure Recovery) procedure.

Here, for example, the resource for a beam report may be transmitted in a form of an inter-UE physical feedback channel (e.g., PSFCH).

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, the UE may trigger a beam failure indication (e.g., BFI; Beam Failure Indication) for beam management. For example, the UE may trigger a beam failure indication (e.g., BFI) based on a discontinuous transmission (e.g., DTX) determination for a resource for a beam report. For example, when a resource for a beam report is transmitted in a form of an inter-UE physical feedback channel (e.g., PSFCH), if a (consecutive) number of discontinuous transmissions (e.g., DTX) of the inter-UE physical feedback channel (e.g., PSFCH) exceeds a reference value (or threshold), a beam failure indication (e.g., BFI) may be triggered.

Here, for example, the UE may use only a discontinuous transmission (e.g., DTX) for an inter-UE physical feedback channel (e.g., PSFCH) for a beam report as a criterion for triggering a beam failure indication (e.g., BFI), and may not reflect a discontinuous transmission (e.g., DTX) for an inter-UE physical feedback channel (e.g., PSFCH) for a feedback (e.g., HARQ feedback) operation.

Here, for example, when a beam failure indication (e.g., BFI) occurs a predetermined number of times or more, the UE may determine beam failure detection (e.g., BFD) and may perform a beam failure recovery (e.g., BFR) procedure. When the proposed method of the present disclosure is applied, the UE may independently perform a radio link failure (e.g., RLF; Radio Link Failure) determination for feedback (e.g., HARQ feedback) management and a beam failure detection determination for beam management, and may perform a link/beam recovery procedure suitable for each event.

For example, the above [Proposal #07] may be applied in combination with other proposal(s) within a range in which operations of the present disclosure do not conflict.

[Proposal #08]

According to an embodiment of the present disclosure, in a method by which a UE performs beam management, a method may be provided in which, when selecting a transmission resource for transmitting data and/or a reference signal having a specific priority (hereinafter, priority P1) using a specific beam (hereinafter, a first beam), candidate transmission resource(s) satisfying one or more of the following condition(s) among a candidate transmission resource set are excluded.

1. When a specific beam different from the first beam (hereinafter, a second beam) is (pre-)configured, and a priority (hereinafter, priority P2) corresponding to the second beam is higher than P1. Here, for example, a beam for specific slot(s) within a resource pool may be (pre-)configured, and/or priority information for data and/or a reference signal that can use the beam may also be (pre-)configured.

According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report.

Here, when a reference signal for beam measurement is transmitted within a shared resource pool, there may be a constraint on a beam direction in resource(s) in which the reference signal for beam measurement is transmitted. For example, specific resource(s) within the shared resource pool may be (pre-)configured, and the UE may be required to transmit the reference signal for beam measurement in a pre-agreed beam direction in the specific resource(s). Here, since the specific slot(s) exist within the shared resource pool, they may need to be shared for transmission of other types of data and/or reference signals. Here, when selecting a transmission resource for the data and/or reference signal, a constraint on a (pre-)configured beam for the specific resource(s) may need to be considered.

Here, for example, if a priority of data and/or a reference signal that the UE intends to transmit is P1, and a priority of the (pre-)configured reference signal for beam measurement is P2, when P1 is higher than P2, the UE may ignore the (pre-)configuration and perform transmission using a beam suitable for the data and/or reference signal. In this case, transmission of the reference signal for beam measurement may be omitted.

Alternatively, for example, when a beam for transmitting the data and/or the reference signal (hereinafter, a first beam) is the same as a (pre-)configured beam (hereinafter, a second beam), the corresponding resource may still be used as a candidate resource for transmission of the data and/or the reference signal. Here, when P1 is lower than P2 and the first beam and the second beam are different, the UE may prioritize transmission of the reference signal for beam measurement for which a beam direction is (pre-)configured, and may exclude the specific resource(s) from candidate transmission resource(s) for the data and/or the reference signal.

For example, the above [Proposal #08] may be applied in combination with other proposal(s) within a range in which operations of the present disclosure do not conflict.

[Proposal #09]

According to an embodiment of the present disclosure, in a method by which a UE performs a beam report, a method may be provided in which whether the beam report corresponds to a case in which a (pre-)configured condition is satisfied is reported together.
Here, for example, the (pre-)configured condition may include that reception strength exceeds a predetermined reference value.
Here, information for whether the (pre-)configured condition is satisfied may be included in a payload of a resource for a beam report and may be transmitted.
According to an embodiment of the present disclosure, in a next-generation communication system, assuming that a UE performs inter-UE communication (e.g., SL communication), when the UE performs multi-beam-based inter-UE communication (e.g., SL communication), the UE may transmit a reference signal for beam measurement and/or a resource for a beam report for beam management. For example, a transmitting UE may transmit a reference signal for beam measurement, and a receiving UE may perform beam measurement based on the reference signal for beam measurement and then transmit feedback through a corresponding resource for a beam report. Here, for example, the UE may perform a beam report when a measurement result for the reference signal for beam measurement satisfies a predetermined condition.
For example, the UE may perform a beam report when reference signal received power (e.g., RSRP) for a reference signal for beam measurement exceeds a (pre-)configured reference value. Here, when reference signal received power (e.g., RSRP) of all reference signal(s) for beam measurement does not exceed the reference value, the UE may report a beam having a highest reference signal received power (e.g., RSRP) among the reference signal(s) for beam measurement. Here, the UE may distinguish whether a reported beam corresponds to a beam that achieves the reference signal received power (e.g., RSRP) reference value or corresponds to a beam selected in a best effort (BE) manner, and may report the distinction.
Accordingly, for example, in the present disclosure, in a method by which a UE performs a beam report, a method is proposed in which (information for) whether the beam report corresponds to a case in which a (pre-)configured condition is satisfied is reported together. Here, for example, the (pre-)configured condition may include that reception strength exceeds a predetermined reference value. Here, (information for) whether the (pre-)configured condition is satisfied may be included in a payload of a resource for a beam report and may be transmitted.
For example, the above [Proposal #09] may be applied in combination with other proposal(s) within a range in which operations of the present disclosure do not conflict.
Various methods proposed above may be applied to a device described below. First, a processor 202 of a receiving UE may configure at least one bandwidth part (e.g., BWP). In addition, the processor 202 of the receiving UE may control a transceiver 206 of the receiving UE to receive, from a transmitting UE, an inter-UE communication (e.g., SL communication)-related physical channel and/or an inter-UE communication (e.g., SL communication)-related reference signal on at least one bandwidth part (e.g., BWP).
In FR2, during inter-UE communication (e.g., SL communication), a UE may perform transmission and/or reception operations based on multiple panels and/or beam directions. Here, a spatial setting including beam-related information or a spatial domain transmission/reception filter may need to be defined. A transmitting UE may transmit a reference signal for beam measurement in a form of beam sweeping (e.g., a form in which an identical signal is transmitted using all (or some) possible transmit beam(s) by varying beams) in order to determine a beam to be transmitted to a receiving UE, and the receiving UE that has received the reference signal may transmit, to the transmitting UE, a measurement report related to a beam used for transmission of the received signal.
According to an embodiment of the present disclosure, a UE may receive, from another UE, a reference signal for beam measurement, receive a measurement report of a UE that transmits a measurement report for the reference signal, and, when reception strength of the measurement report is equal to or greater than a predetermined level, may exclude a reserved resource of the other UE corresponding to a beam through which the measurement report is received from candidate resource(s) for transmission resource selection of the UE.
According to various embodiments of the present disclosure, an effect of wireless communication being smoothly performed may occur, by preventing, based on a beam report, a resource for which a collision may occur from a perspective of a receiving UE from being selected in a resource selection procedure of the UE.

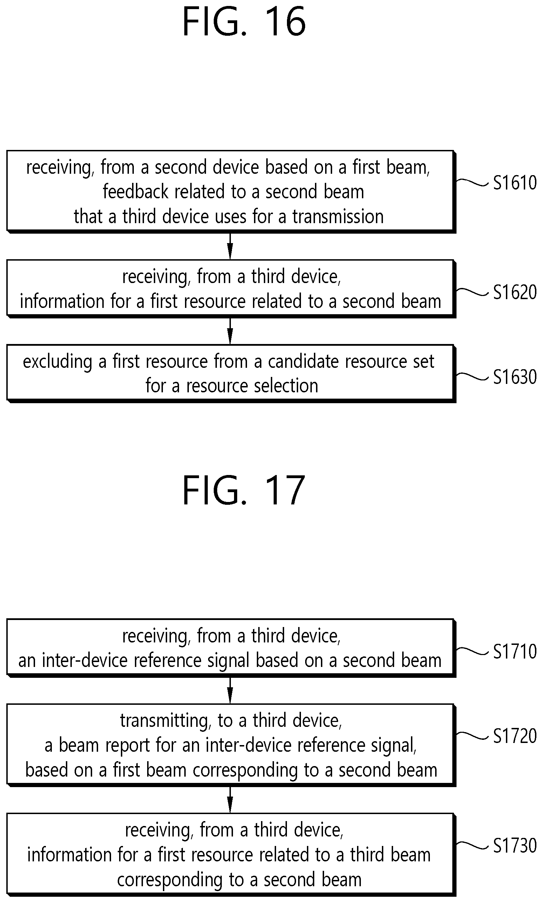

FIG. 16 shows a procedure that may be performed by a first device according to an embodiment of the present disclosure. The embodiment of FIG. 16 may be combined with various embodiments of the present disclosure.
Referring to FIG. 16, in step S1610, a first device may receive, from a second device based on a first beam, feedback related to a second beam that a third device uses for a transmission. For example, a reception strength of the feedback may be greater than or equal to a threshold value. In step S1620, the first device may receive, from the third device, information for a first resource related to the second beam. In step S1630, the first device may exclude the first resource from a candidate resource set for a resource selection.

For example, the feedback may be a beam report for a reference signal related to the second beam.

For example, the feedback may be transmitted by the second device, based on a second resource related to a third beam corresponding to the second beam.

For example, the information for the first resource may be received through control information related to beam sweeping.

For example, an inter-device reference signal may be transmitted from the third device to the first device, based on the beam sweeping.

For example, the feedback may include a measurement value for the first reference signal.

For example, additionally, the first device may: select a second resource from the candidate resource set; and perform an inter-device transmission based on the second resource. For example, the candidate resource set may be a candidate resource set for a transmission that is to be performed based on a third beam corresponding to the first beam.

For example, the feedback may include information related to whether reference signal received power for the second beam exceeds a threshold value.

For example, a third beam used for a transmission of the feedback may be in a one-to-one correspondence relationship with the second beam.

For example, a third beam used for a transmission of the feedback may be a beam having a direction opposite to the second beam.

For example, additionally, the first device may: select a non-preferred resource from the candidate resource set.

For example, additionally, the first device may: transmit, to a fourth device, information for the non-preferred resource.

For example, additionally, the first device may: select a preferred resource from the candidate resource set.

The above-described embodiment may be applied to various devices described below. First, a processor 102 of a first device 100 may control a transceiver 106 to receive, from a second device 200 based on a first beam, feedback related to a second beam that a third device 300 uses for a transmission. For example, a reception strength of the feedback may be greater than or equal to a threshold value. And, the processor 102 of the first device 100 may control the transceiver 106 to receive, from the third device 300, information for a first resource related to the second beam. And, the processor 102 of the first device 100 may exclude the first resource from a candidate resource set for a resource selection.

According to an embodiment of the present disclosure, a first device may comprise: at least one transceiver; at least one processor; and at least one memory connected to the at least one processor and storing instructions. For example, the instructions, based on being executed by the at least one processor, may cause the first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

For example, the feedback may be a beam report for a reference signal related to the second beam.

For example, the feedback may be transmitted by the second device, based on a second resource related to a third beam corresponding to the second beam.

For example, the information for the first resource may be received through control information related to beam sweeping.

For example, an inter-device reference signal may be transmitted from the third device to the first device, based on the beam sweeping.

For example, the feedback may include a measurement value for the first reference signal.

For example, additionally, the instructions may cause the first device to: select a second resource from the candidate resource set; and perform an inter-device transmission based on the second resource. For example, the candidate resource set may be a candidate resource set for a transmission that is to be performed based on a third beam corresponding to the first beam.

For example, the feedback may include information related to whether reference signal received power for the second beam exceeds a threshold value.

For example, a third beam used for a transmission of the feedback may be in a one-to-one correspondence relationship with the second beam.

For example, a third beam used for a transmission of the feedback may be a beam having a direction opposite to the second beam.

For example, additionally, the instructions may cause the first device to: select a non-preferred resource from the candidate resource set.

For example, additionally, the instructions may cause the first device to: transmit, to a fourth device, information for the non-preferred resource.

For example, additionally, the instructions may cause the first device to: select a preferred resource from the candidate resource set.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

According to an embodiment of the present disclosure, a non-transitory computer-readable storage medium storing instructions may be proposed. For example, the instructions, based on being executed, may cause a first device to: receive, from a second device based on a first beam, feedback related to a second beam that a third device uses for a transmission, wherein a reception strength of the feedback may be greater than or equal to a threshold value; receive, from the third device, information for a first resource related to the second beam; and exclude the first resource from a candidate resource set for a resource selection.

FIG. 17 shows a procedure that may be performed by a second device according to an embodiment of the present disclosure. The embodiment of FIG. 17 may be combined with various embodiments of the present disclosure.

Referring to FIG. 17, in step S1710, a second device may receive, from a third device, an inter-device reference signal based on a second beam. In step S 1720, the second device may transmit, to the third device, a beam report for the inter-device reference signal, based on a first beam corresponding to the second beam. For example, the beam report may be received by a first device, and a reception strength of the beam report at the first device may be greater than or equal to a threshold value. In step S1730, the second device may receive, from the third device, information for a first resource related to a third beam corresponding to the second beam. For example, the information for the first resource may be received by the first device, and the first resource may be excluded from a candidate resource set for a resource selection at the first device.

For example, the beam report may be transmitted based on a second resource related to the first beam.

The above-described embodiment may be applied to various devices described below. First, a processor 202 of a second device 200 may control a transceiver 206 to receive, from a third device 300, an inter-device reference signal based on a second beam. And, the processor 202 of the second device 200 may control the transceiver 206 to transmit, to the third device 300, a beam report for the inter-device reference signal, based on a first beam corresponding to the second beam. For example, the beam report may be received by a first device 100, and a reception strength of the beam report at the first device 100 may be greater than or equal to a threshold value. And, the processor 202 of the second device 200 may control the transceiver 206 to receive, from the third device 300, information for a first resource related to a third beam corresponding to the second beam. For example, the information for the first resource may be received by the first device 100, and the first resource may be excluded from a candidate resource set for a resource selection at the first device 100.

According to an embodiment of the present disclosure, a second device may be proposed. For example, the first device may comprise: at least one transceiver; at least one processor; and at least one memory connected to the at least one processor and storing instructions. For example, the instructions, based on being executed by the at least one processor, may cause the second device to: receive, from a third device, an inter-device reference signal based on a second beam; transmit, to the third device, a beam report for the inter-device reference signal, based on a first beam corresponding to the second beam, wherein the beam report may be received by a first device, and wherein a reception strength of the beam report at the first device may be greater than or equal to a threshold value; and receive, from the third device, information for a first resource related to a third beam corresponding to the second beam, wherein the information for the first resource may be received by the first device, and wherein the first resource may be excluded from a candidate resource set for a resource selection at the first device.

For example, the beam report may be transmitted based on a second resource related to the first beam.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

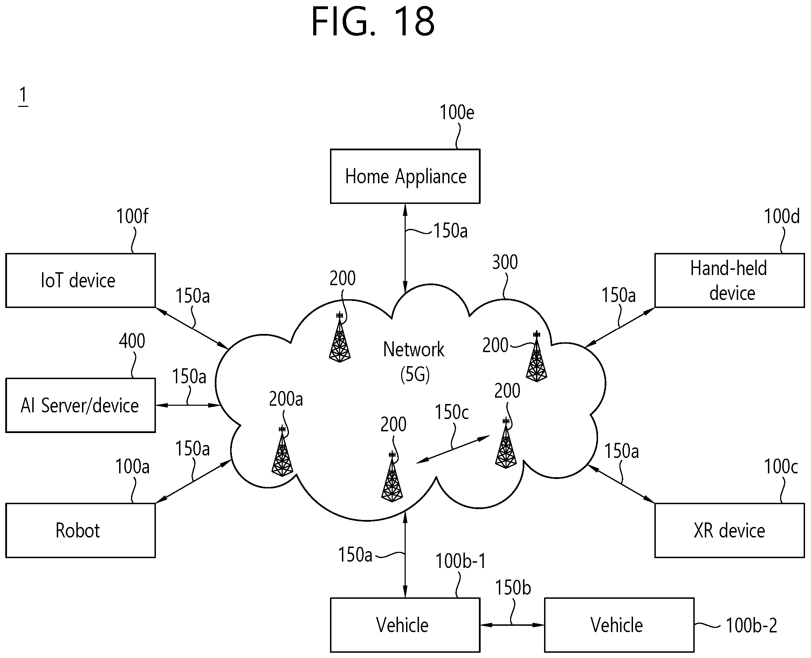

FIG. 18 shows a communication system 1, based on an embodiment of the present disclosure. The embodiment of FIG. 18 may be combined with various embodiments of the present disclosure.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

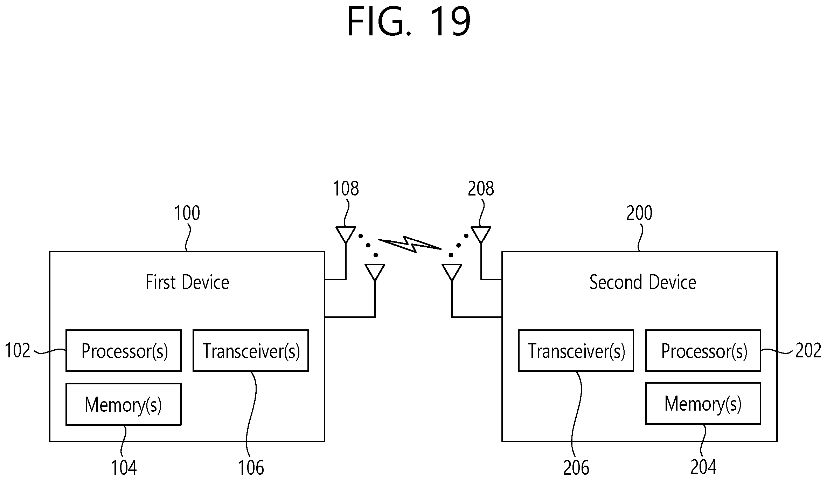

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

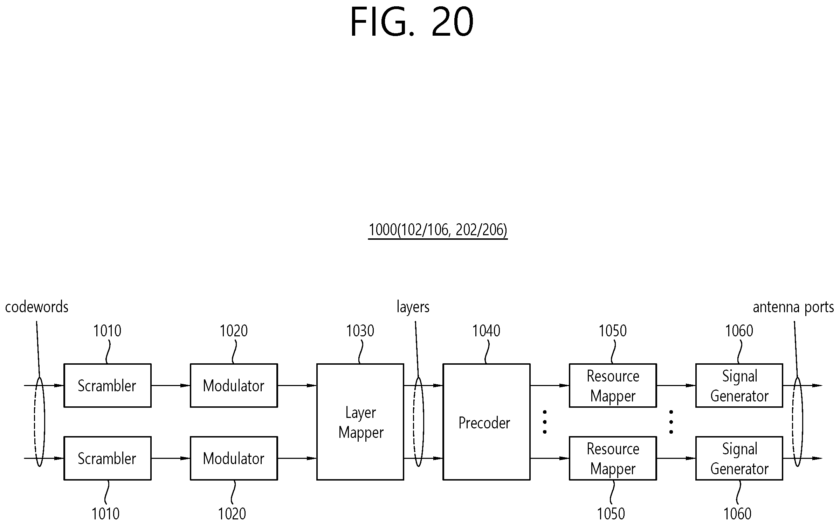

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

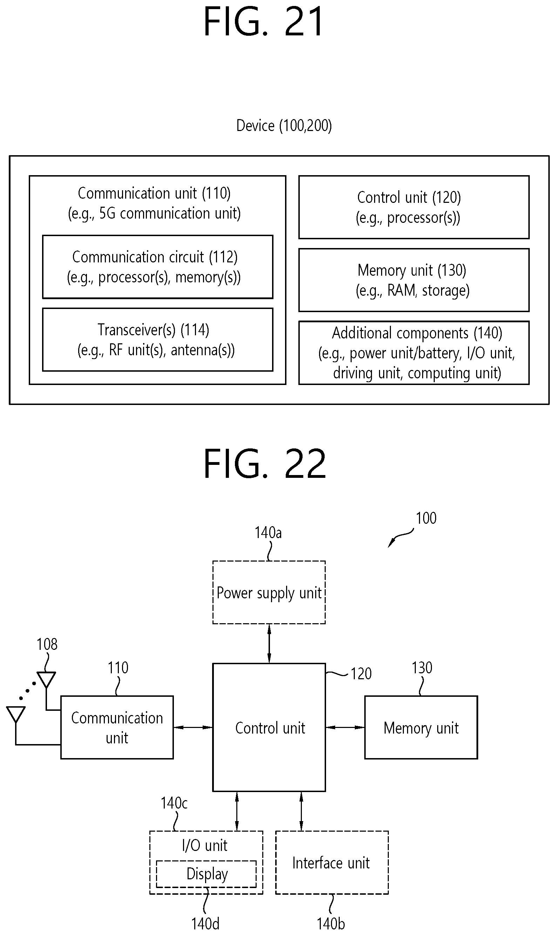

FIG. 21 shows another example of a wireless device, based on an embodiment of the present disclosure. The wireless device may be implemented in various forms according to a use-case/service (refer to FIG. 18). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-

signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

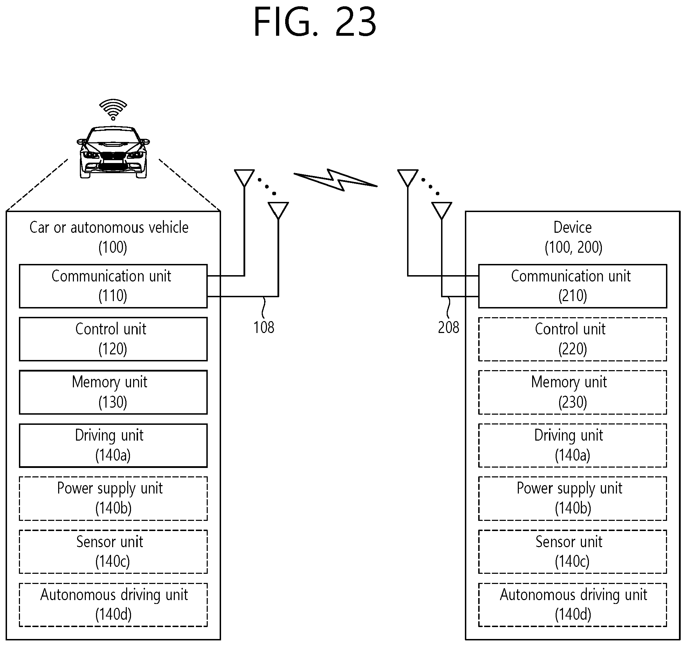

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:

   receiving, from a second device based on a first beam, feedback related to a second beam that a third device uses for a transmission,
   wherein a reception strength of the feedback is greater than or equal to a threshold value;
   receiving, from the third device, information for a first resource related to the second beam; and
   excluding the first resource from a candidate resource set for a resource selection.

**2.** The method of claim 1, wherein the feedback is a beam report for a reference signal related to the second beam.

**3.** The method of claim 2, wherein the feedback is transmitted by the second device, based on a second resource related to a third beam corresponding to the second beam.

**4.** The method of claim 1, wherein the information for the first resource is received through control information related to beam sweeping.

**5.** The method of claim 4, wherein an inter-device reference signal is transmitted from the third device to the first device, based on the beam sweeping.

**6.** The method of claim 5, wherein the feedback includes a measurement value for the first reference signal.

**7.** The method of claim 1, further comprising:

selecting a second resource from the candidate resource set; and
performing an inter-device transmission based on the second resource,
wherein the candidate resource set is a candidate resource set for a transmission that is to be performed based on a third beam corresponding to the first beam.

**8.** The method of claim 1, wherein the feedback includes information related to whether reference signal received power for the second beam exceeds a threshold value.

**9.** The method of claim 1, wherein a third beam used for a transmission of the feedback is in a one-to-one correspondence relationship with the second beam.

**10.** The method of claim 1, wherein a third beam used for a transmission of the feedback is a beam having a direction opposite to the second beam.

**11.** The method of claim 1, further comprising:
selecting a non-preferred resource from the candidate resource set.

**12.** The method of claim 11, further comprising:
transmitting, to a fourth device, information for the non-preferred resource.

**13.** The method of claim 1, further comprising:
selecting a preferred resource from the candidate resource set.

**14.** A first device comprising:

at least one transceiver;
at least one processor; and
at least one memory connected to the at least one processor and storing instructions,
wherein the instructions, based on being executed by the at least one processor, cause the first device to:

receive, from a second device based on a first beam, feedback related to a second beam that a third device uses for a transmission,
wherein a reception strength of the feedback is greater than or equal to a threshold value;
receive, from the third device, information for a first resource related to the second beam; and
exclude the first resource from a candidate resource set for a resource selection.

**15.** A processing device adapted to control a first device comprising:

at least one processor; and
at least one memory connected to the at least one processor and storing instructions,
wherein the instructions, based on being executed by the at least one processor, cause the first device to:

receive, from a second device based on a first beam, feedback related to a second beam that a third device uses for a transmission,
wherein a reception strength of the feedback is greater than or equal to a threshold value;
receive, from the third device, information for a first resource related to the second beam; and
exclude the first resource from a candidate resource set for a resource selection.

16. A non-transitory computer-readable storage medium storing instructions that, based on being executed, cause a first device to:

   receive, from a second device based on a first beam, feedback related to a second beam that a third device uses for a transmission,
   wherein a reception strength of the feedback is greater than or equal to a threshold value;
   receive, from the third device, information for a first resource related to the second beam; and
   exclude the first resource from a candidate resource set for a resource selection.

17. A method comprising:

   receiving, from a third device, an inter-device reference signal based on a second beam;
   transmitting, to the third device, a beam report for the inter-device reference signal, based on a first beam corresponding to the second beam,
   wherein the beam report is received by a first device, and
   wherein a reception strength of the beam report at the first device is greater than or equal to a threshold value; and
   receiving, from the third device, information for a first resource related to a third beam corresponding to the second beam,
   wherein the information for the first resource is received by the first device, and
   wherein the first resource is excluded from a candidate resource set for a resource selection at the first device.

18. The method of claim 17, wherein the beam report is transmitted based on a second resource related to the first beam.

19. A second device comprising:

   at least one transceiver;
   at least one processor; and
   at least one memory connected to the at least one processor and storing instructions,
   wherein the instructions, based on being executed by the at least one processor, cause the second device to:

      receive, from a third device, an inter-device reference signal based on a second beam;
      transmit, to the third device, a beam report for the inter-device reference signal, based on a first beam corresponding to the second beam,
      wherein the beam report is received by a first device, and
      wherein a reception strength of the beam report at the first device is greater than or equal to a threshold value; and
      receive, from the third device, information for a first resource related to a third beam corresponding to the second beam,
      wherein the information for the first resource is received by the first device, and
      wherein the first resource is excluded from a candidate resource set for a resource selection at the first device.

20. The second device of claim 19, wherein the beam report is transmitted based on a second resource related to the first beam.

# FIG. 1

# FIG. 2

EP 4 776 525 A1

| Radio | Microwave | Infrared | Visible | Ultraviolet | X-Ray | Gamma-Ray |

mmWave | Terahertz

Wavelength $10^8$ m  1m  10mm  1mm  0.1mm  700nm  390nm  10nm  0.01nm

Radiation Type

Frequency  3 Hz  300 MHz  30 GHz  300 GHz  3 THz  430 THz  730 THz  30 PHz  30 EHz

Mega : $10^6$   Giga : $10^9$   Tera : $10^{12}$   Peta : $10^{15}$   Exa : $10^{18}$

# FIG. 3

Satellite
(or UAS platform)

Service
link

Feeder link

Gateway

Data network

User
Equipments

Beam foot
print

Field of view of the satellite
(or UAS platform)

EP 4 776 525 A1

# FIG. 4

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

EP 4 776 525 A1

# FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

# FIG. 7

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

BS          first UE          second UE          first UE          second UE

resource scheduling S800

PSCCH S810          PSCCH S810

PSSCH S820          PSSCH S820

PSFCH S830          PSFCH S830

PUCCH/PUSCH S840

(a)                                        (b)

**FIG. 9**

# FIG. 10

EP 4 776 525 A1

# FIG. 11

Scheme #1

Scheme #2

Scheme #3

☐ : Dedicated resource pool    ▨ : Triggering for a reference signal    ▤ : Resource for a beam report

▦ : shared resource pool    ■ : Reference signal for beam measurement    ------► : triggering

# FIG. 12

EP 4 776 525 A1

☐ : Resource pool #1    ■ : Reference signal for beam measurement    ----▶ : triggering

▦ : Resource pool #2    ▤ : Resource for a beam report

frequency

time

Transmission timing

frequency

time

Reference resource

# FIG. 13

Slot group

Time resource index

slot

| 0 | 1 | 2 | 3 |

Beam measurement reference signal for the beam #k
(k=0, 1, 2, ...)

EP 4 776 525 A1

# FIG. 14

indication

slot

Transmit beam ID corresponding to a repot

Reserved transmission

| 0 | 1 | 2 | 3 | 0 | 1 | 2 | 3 | 0 | 1 | 2 | 3 | 0 | 1 | 2 | 3 |

UE 1

transmit beam ID | 0 | 1 | 2 | 3 | 0 | 1 | 2 | 3 | 0 | 1 | 2 | 3 | 0 | 1 | 2 | 3 |   · · ·   transmit beam ID | 0 | 1 | 2 | 3 |   전송 빔 ID | 2 |

Beam pairing

UE 2

· · ·

receive beam ID | 0 | 1 | 2 | 3 |   transmit beam ID | 1 | 1 | 1 | 1 |   · · ·

Excluded from candidate resource(s)
for a transmit beam ID 1

UE 3

· · ·

receive beam ID | 0 | 1 | 2 | 3 |   receive beam ID | 0 | 1 | 2 | 3 |   · · ·

Reference signal received power from UE 2

: Beam measurement reference signal       : Resource for a beam report       : Reserved transmission resource

EP 4 776 525 A1

# FIG. 15

# FIG. 16

receiving, from a second device based on a first beam,
feedback related to a second beam
that a third device uses for a transmission
⟩~ S1610

receiving, from a third device,
information for a first resource related to a second beam
⟩~ S1620

excluding a first resource from a candidate resource set
for a resource selection
⟩~ S1630

# FIG. 17

receiving, from a third device,
an inter-device reference signal based on a second beam
⟩~ S1710

transmitting, to a third device,
a beam report for an inter-device reference signal,
based on a first beam corresponding to a second beam
⟩~ S1720

receiving, from a third device,
information for a first resource related to a third beam
corresponding to a second beam
⟩~ S1730

# FIG. 18

EP 4 776 525 A1

# FIG. 19

# FIG. 20

# FIG. 21

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 22

100

140a
Power supply unit

108

110
Communication
unit

120
Control unit

130
Memory unit

140c
I/O unit
Display

Interface unit

140d

140b

# FIG. 23

**Car or autonomous vehicle (100)**
- Communication unit (110)
- Control unit (120)
- Memory unit (130)
- Driving unit (140a)
- Power supply unit (140b)
- Sensor unit (140c)
- Autonomous driving unit (140d)

108

**Device (100, 200)**
- Communication unit (210)
- Control unit (220)
- Memory unit (230)
- Driving unit (140a)
- Power supply unit (140b)
- Sensor unit (140c)
- Autonomous driving unit (140d)

208

EP 4 776 525 A1

# INTERNATIONAL SEARCH REPORT

International application No.

**PCT/KR2024/013597**

**A.     CLASSIFICATION OF SUBJECT MATTER**

**H04B 7/06**(2006.01)i; **H04B 7/08**(2006.01)i; **H04B 7/0408**(2017.01)i; **H04W 24/08**(2009.01)i; **H04W 24/10**(2009.01)i; **H04W 72/0446**(2023.01)i; **H04W 72/0457**(2023.01)i; **H04W 72/25**(2023.01)i; **H04W 76/28**(2018.01)i

According to International Patent Classification (IPC) or to both national classification and IPC

**B.     FIELDS SEARCHED**

Minimum documentation searched (classification system followed by classification symbols)

H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 빔 보고(beam report), 후보 자원 집합(candidate resource set), 배제(exclusion)

**C.     DOCUMENTS CONSIDERED TO BE RELEVANT**

| Category* | Citation of document, with indication, where appropriate, of the relevant passages | Relevant to claim No. |
|---|---|---|
| X<br>Y | NOKIA et al. On Beam Management for Sidelink in FR2. R1-2306449, 3GPP TSG RAN WG1 #114. Toulouse, France. 12 August 2023.<br>See pages 10, 20, 27-28, 42-43, 45 and 47-48; and figures 6, 9 and 14-15. | 1-3,7-20<br>4-6 |
| Y | HUAWEI et al. Enhanced sidelink operation on FR2 licensed spectrum. R1-2306523, 3GPP TSG RAN WG1 #114. Toulouse, France. 11 August 2023.<br>See pages 3, 13-15 and 19; and figures 2 and 9. | 4-6 |
| A | TOYOTA INFOTECHNOLOGY CENTER. Discussion on enhanced sidelink operation on FR2 licensed spectrum. R1-2306685, 3GPP TSG RAN WG1 #114. Toulouse, France. 11 August 2023.<br>See section 2.6. | 1-20 |
| A | LG ELECTRONICS. Discussion on enhanced sidelink operation on FR2 licensed spectrum. R1-2307976, 3GPP TSG RAN WG1 #114. Toulouse, France. 11 August 2023.<br>See section 2.5. | 1-20 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 776 525 A1**

### INTERNATIONAL SEARCH REPORT

International application No.

**PCT/KR2024/013597**

**C.    DOCUMENTS CONSIDERED TO BE RELEVANT**

| Category* | Citation of document, with indication, where appropriate, of the relevant passages | Relevant to claim No. |
|---|---|---|
| A | WO 2023-168180 A1 (APPLE INC.) 07 September 2023 (2023-09-07)<br>See paragraphs [0122]-[0204]; and figures 5-23. | 1-20 |

Form PCT/ISA/210 (second sheet) (July 2022)

## INTERNATIONAL SEARCH REPORT
### Information on patent family members

International application No.

**PCT/KR2024/013597**

| Patent document cited in search report | Publication date (day/month/year) | Patent family member(s) | Publication date (day/month/year) |
|---|---|---|---|
| WO 2023-168180 A1 | 07 September 2023 | None | |